# EUROPEAN PATENT SPECIFICATION

(11) **EP 3 817 123 B1**
(45) Date of publication and mention of the grant of the patent: **02.07.2025**
(21) Application number: 19837600.6
(22) Date of filing: 19.07.2019
(51) Int. Cl.: H01M 10/0587, H01M 10/04, H01M 10/0525

(54) **ELECTRODE ASSEMBLY AND SECONDARY BATTERY COMPRISING THE SAME**
ELEKTRODENANORDNUNG UND WIEDERAUFLADBARE BATTERIE DAMIT
ENSEMBLE D'ÉLECTRODES ET BATTERIE RECHARGEABLE LE COMPRENANT

(30) Priority: 20.07.2018 KR 20180084529; 04.06.2019 KR 20190066144
(43) Date of publication of application: 05.05.2021
(73) Proprietor: LG Energy Solution, Ltd., Seoul 07335 (KR)
(72) Inventor: LIM, Hae Jin, Daejeon 34122 (KR); KIM, Min, Daejeon 34122 (KR); KIM, Sang Uck, Daejeon 34122 (KR)
(74) Representative: Plasseraud IP
(86) International application number: PCT/KR2019/008948
(87) International publication number: WO 2020/017923

(56) References cited:
- EP-A1- 3 236 513
- CN-A- 1 929 186
- JP-A- 2000 067 907
- JP-A- 2006 260 892
- KR-A- 20040 058 921
- KR-A- 20120 088 210
- KR-A- 20140 059 737
- KR-A- 20150 089 448
- KR-A- 20150 117 135
- KR-A- 20160 010 080
- KR-A- 20160 101 347
- KR-A- 20160 108 857
- US-A1- 2006 147 793
- US-A1- 2010 035 144
- US-A1- 2010 190 056
- US-A1- 2012 177 963
- US-A1- 2012 208 055
- US-A1- 2015 037 638

## Description

### CROSS-REFERENCE TO RELATED APPLICATION

The present application claims the benefit of the priority of Korean Patent Application Nos. 10-2018-0084529, filed on July 20, 2018, and 10-2019-0066144, filed on June 04, 2019.

### TECHNICAL FIELD

The present invention relates to an electrode assembly and a secondary battery comprising the same.

### BACKGROUND ART

Secondary batteries are rechargeable unlike primarily batteries, and also, the possibility of compact size and high capacity is high. Thus, recently, many studies on rechargeable batteries are being carried out. As technology development and demands for mobile devices increase, the demands for rechargeable batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

The electrode assembly may be approximately classified into a jelly-roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length. Among them, the jelly-roll type electrode assembly is widely used because the jelly-roll type electrode assembly has an advantage is easily manufactured and has high energy density per weight.
CN 1 929 186 A, JP 2006 260892 A, KR 2016 0101347 A, KR 2016 0108857 A, EP 3 236 513 A1, US 2006/147793 A1, US 2010/035144 A1, US 2012/177963 A1, US 2012/208055 A1, US 2015/037638 A1, KR 2016 0010080 A, KR 2004 0058921 A, and US 2010/190056 A1 disclose an electrode assembly

### DISCLOSURE OF THE INVENTION

### TECHNICAL PROBLEM

One aspect of the present invention is to provide an electrode assembly that is capable of reducing resistance and a secondary battery comprising the same.

Also, another aspect of the present invention is to provide an electrode assembly that is capable of minimizing a capacity loss and a secondary battery comprising the same.

### TECHNICAL SOLUTION

An electrode assembly according to a first embodiment of the present invention as defined in the appended set of claims comprises: a positive electrode sheet comprising a positive electrode active material portion that is an area on which a positive electrode active material is stacked on a positive electrode collector and a positive electrode non-coating portion that is an area on which the positive electrode active material is not stacked; a positive electrode tab disposed on the positive electrode non-coating portion; a negative electrode sheet comprising a negative electrode active material portion that is an area on which a negative electrode active material is stacked on a negative electrode collector and a negative electrode non-coating portion that is an area on which the negative electrode active material is not stacked; a negative electrode tab disposed on the negative electrode non-coating portion; and a separator configured to insulate the positive electrode sheet and the negative electrode sheet from each other, wherein the positive electrode non-coating portion comprises a first positive electrode non-coating portion and a second positive electrode non-coating portion, which are provided on two portions spaced apart from each other on the positive electrode sheet, the negative electrode non-coating portion comprises a first negative electrode non-coating portion disposed between both side portions of the negative electrode sheet and second and third negative electrode non-coating portions, which are respectively disposed on both side portions of the negative electrode sheet, and the first positive electrode non-coating portion and the first negative electrode non-coating portion are disposed at positions corresponding to each other.

Also, a secondary battery according to an embodiment of the present invention as defined in the appended set of claims comprises an electrode assembly and a battery case configured to accommodate the electrode assembly, wherein the electrode assembly comprises: a positive electrode sheet comprising a positive electrode collector, a positive electrode active material stacked on the positive electrode collector, and a positive electrode non-coating portion that is an area on which the positive electrode active material is not stacked; a positive electrode tab disposed on the positive electrode non-coating portion; a negative electrode sheet comprising a negative electrode collector, a negative electrode active material stacked on the negative electrode collector, and a negative electrode non-coating portion that is an area on which the negative electrode active material is not stacked; a negative electrode tab disposed on the negative electrode sheet; and a separator configured to insulate the positive electrode sheet and the negative electrode sheet from each other, wherein the positive electrode non-coating portion comprises a first positive electrode non-coating portion and a second positive electrode non-coating portion, which are provided on two portions on the positive electrode sheet, the negative electrode non-coating portion comprises a first negative electrode non-coating portion disposed between both side portions of the negative electrode sheet and second and third negative electrode non-coating portions, which are respectively disposed on both side portions of the negative electrode sheet, and the first positive electrode non-coating portion and the first negative electrode non-coating portion are disposed at positions corresponding to each other.

Also, an electrode assembly according to a second embodiment of the present invention as defined in the appended set of claims comprises: a positive electrode plate comprising a positive electrode active material portion on which a positive electrode active material is applied on a first surface of a positive electrode collector and a first positive electrode non-coating portion that is an area on which the positive electrode active material is not applied; a positive electrode tab attached to the first positive electrode non-coating portion; a negative electrode plate comprising a negative electrode active material portion on which a negative electrode active material is applied on a first surface of a negative electrode collector facing the first surface of the positive electrode collector and a first negative electrode non-coating portion that is an area on which the negative electrode active material is not applied; and a separator disposed between the positive electrode plate and the negative electrode plate, wherein the first positive electrode non-coating portion is disposed one end and the other end of the positive electrode plate in a longitudinal direction of the positive electrode plate, and the first negative electrode non-coating portion is disposed at a position overlapping the first positive electrode non-coating portion, the first negative electrode non-coating portion is disposed between a second negative electrode non-coating portion and a third negative electrode non-coating portion, which are respectively disposed on each of both side portions of the negative electrode plate, and to which a negative electrode tab is attached, and the electrode assembly further comprises a negative electrode tab disposed on the first negative electrode non-coating portion.

Furthermore, an electrode assembly according to a third embodiment of the present invention as defined in the set of claims comprises: a positive electrode sheet comprising a positive electrode active material portion that is an area on which a positive electrode active material is stacked on a positive electrode collector and a positive electrode non-coating portion that is an area on which the positive electrode active material is not stacked; a positive electrode tab disposed on the positive electrode non-coating portion; a negative electrode sheet comprising a negative electrode active material portion that is an area on which a negative electrode active material is stacked on a negative electrode collector and a negative electrode non-coating portion that is an area on which the negative electrode active material is not stacked; a negative electrode tab disposed on the negative electrode non-coating portion; and a separator configured to insulate the positive electrode sheet and the negative electrode sheet from each other, wherein the positive electrode non-coating portion comprises a first positive electrode non-coating portion disposed on the positive electrode sheet, and the negative electrode non-coating portion comprises a first negative electrode non-coating portion disposed on the negative electrode sheet, wherein the first positive electrode non-coating portion and the first negative electrode non-coating portion are disposed at positions corresponding to each other, and the positive electrode tab comprises a first positive electrode tab disposed on the first positive electrode non-coating portion, and the negative electrode tab comprises a first negative electrode tab disposed on the first negative electrode non-coating portion, wherein the first positive electrode tab and the first negative electrode tab are disposed so as not to overlap each other with respect to a direction in which the positive electrode sheet and the negative electrode sheet face each other.

Also, an electrode assembly according to a fourth embodiment of the present invention as defined in the appended set of claims comprises: a positive electrode plate comprising a positive electrode active material portion on which a positive electrode active material is applied on a first surface of a positive electrode collector and a first positive electrode non-coating portion that is an area on which the positive electrode active material is not applied; a positive electrode tab attached to the first positive electrode non-coating portion; a negative electrode plate comprising a negative electrode active material portion on which a negative electrode active material is applied on a first surface of a negative electrode collector facing the first surface of the positive electrode collector and a first negative electrode non-coating portion that is an area on which the negative electrode active material is not applied; and a separator disposed between the positive electrode plate and the negative electrode plate, wherein the first positive electrode non-coating portion is disposed one end and the other end of the positive electrode plate in a longitudinal direction of the positive electrode plate, and the first negative electrode non-coating portion is disposed at a position overlapping the first positive electrode non-coating portion, the first negative electrode non-coating portion is disposed between a second negative electrode non-coating portion and a third negative electrode non-coating portion, which are respectively disposed on each of both side portions of the negative electrode plate, and to which a negative electrode tab is attached, and the electrode assembly further comprises a negative electrode tab disposed on the first negative electrode non-coating portion.

### ADVANTAGEOUS EFFECTS

According to the present invention, the number of electrode tabs may increase to reduce the resistance. Here, the number of negative electrode tabs may increase so that the number of negative electrode tabs is larger than that of positive electrode tabs, thereby minimizing the resistance.

In addition, according to the present invention, the negative electrode non-coating portion on which the additional negative electrode tab and the positive electrode non-coating portion on which the positive electrode tab is disposed may be disposed at the positions corresponding to each other to minimize the capacity loss. Here, the end of the positive electrode tab disposed on the positive electrode non-coating portion and the end of the added negative electrode tab may be spaced a predetermined distance from each other to avoid the overlapping between the positive electrode tab and the negative electrode tab in the direction in which the positive electrode sheet and the negative electrode sheet face each other. Therefore, when the positive electrode sheet and the negative electrode sheet are wound, it is possible to prevent the positive electrode sheet and the negative electrode sheet from being unevenly wound.

Also, the lithium ion deposition prevention tape may be disposed on the portion of the positive electrode sheet facing the negative electrode insulation tape covering the added negative electrode tab to prevent the lithium ion from being accumulated to be deposited.

### BRIEF DESCRIPTION OF THE DRAWINGS

FIG. 1 is an exploded perspective view of a secondary battery to which an electrode assembly is applied according to a first embodiment of the present invention.
FIG. 2 is a partial perspective view illustrating another example of an arrangement of a positive electrode tab in the electrode assembly according to the first embodiment of the present invention.
FIG. 3 is a front view illustrating an unfolded state before the electrode assembly is wound according to the first embodiment of the present invention.
FIG. 4 is a plan view illustrating a stacked state before the electrode assembly is wound according to the first embodiment of the present invention.
FIG. 5 is a plan view illustrating an unfolded state before a positive electrode sheet and a negative electrode sheet are wound in the electrode assembly according to the first embodiment of the present invention.
FIG. 6 is a front view illustrating a main part in the state in which the electrode assembly is wound according to the first embodiment of the present invention.
FIG. 7 is a front view illustrating an unfolded state before an electrode assembly is wound according to a second embodiment of the present invention.
FIG. 8 is a front view illustrating an unfolded state before an electrode assembly is wound according to a third embodiment of the present invention.
FIG. 9 is a front view illustrating a main part in the state in which the electrode assembly is wound according to the third embodiment of the present invention.
FIG. 10 is a perspective view illustrating an unfolded state before a positive electrode plate and a negative electrode plate are wound in an electrode assembly according to a fourth embodiment of the present invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

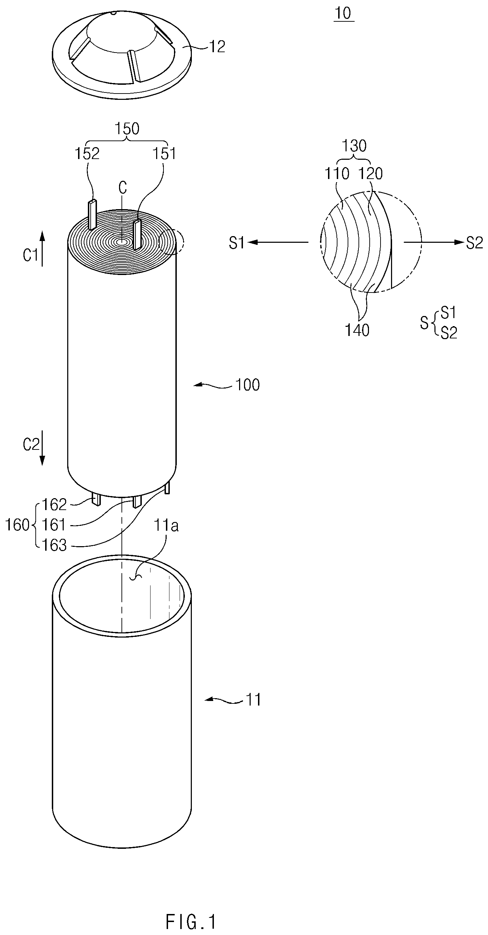

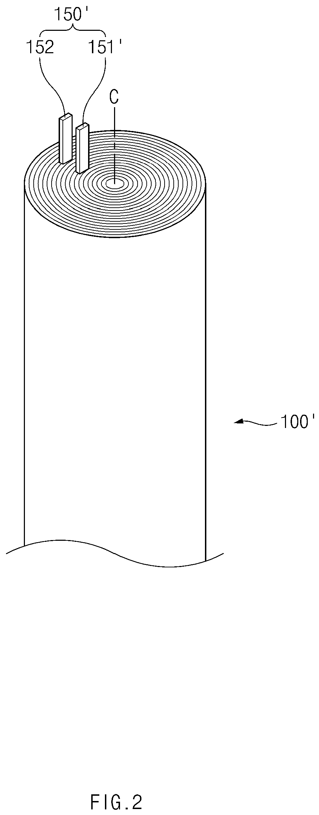

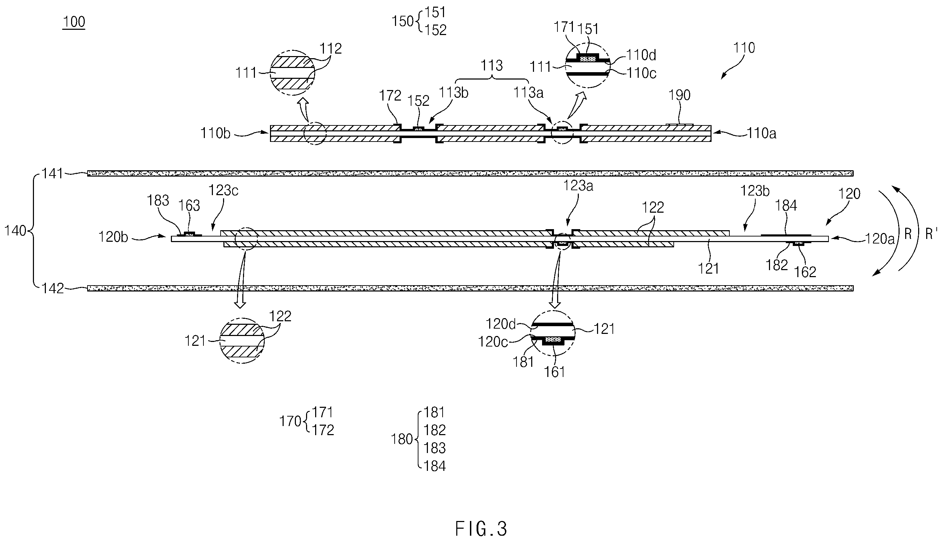

FIG. 1 is an exploded perspective view of a secondary battery to which an electrode assembly is applied according to a first embodiment of the present invention, FIG. 2 is a partial perspective view illustrating another example of an arrangement of a positive electrode tab in the electrode assembly according to the first embodiment of the present invention, and FIG. 3 is a front view illustrating an unfolded state before the electrode assembly is wound according to the first embodiment of the present invention.

Referring to FIGS. 1 and 3, an electrode assembly 100 according to a first embodiment of the present invention comprises a positive electrode sheet 110 comprising a positive electrode active material portion 112 and a positive electrode non-coating portion 113, a positive electrode tab 150 provided on the positive electrode non-coating portion 113, a negative electrode sheet 120 comprising a negative electrode active material portion 122 and a negative electrode non-coating portion 123, a negative electrode tab 160 provided on the negative electrode non-coating portion 123, and a separator 140 provided between the positive electrode sheet 110 and the negative electrode sheet 120.

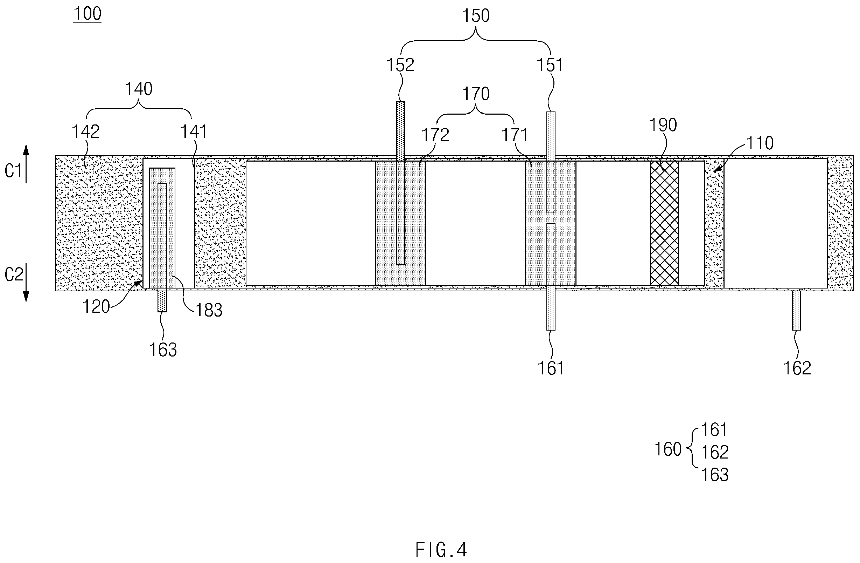

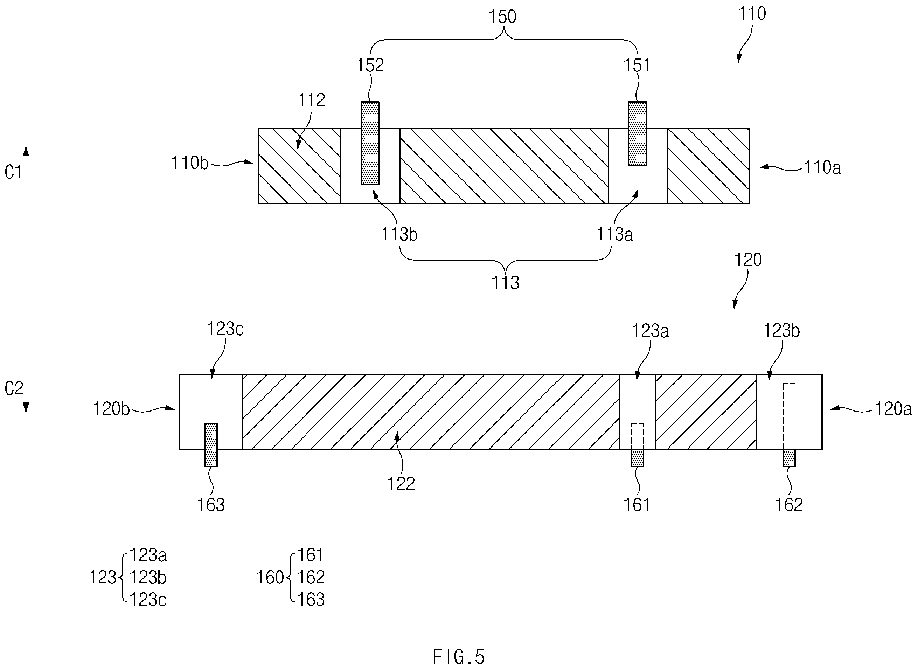

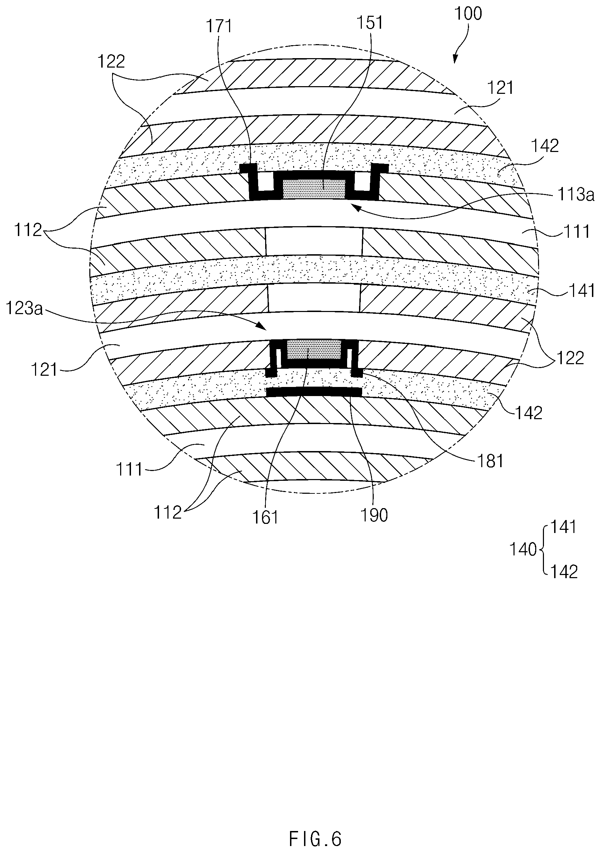

FIG. 4 is a plan view illustrating a stacked state before the electrode assembly is wound according to the first embodiment of the present invention, FIG. 5 is a plan view illustrating an unfolded state before the positive electrode sheet 110 and the negative electrode sheet 120 are wound in the electrode assembly according to the first embodiment of the present invention, and FIG. 6 is a front view illustrating a main part in the state in which the electrode assembly is wound according to the first embodiment of the present invention.

Hereinafter, the electrode assembly according to the first embodiment of the present invention will be described in more detail with reference to FIGS. 1 to 6.

Referring to FIGS. 1 and 3, the electrode assembly 100 may be a chargeable and dischargeable power generation element and have a structure in which an electrode 130 and a separator 140 are combined and alternately stacked with each other. Here, the electrode assembly 100 may be an electrode assembly for a lithium ion secondary battery and may have a wound shape.

The electrode 130 comprises the positive electrode sheet 110 and the negative electrode sheet 120. Also, the separator 140 may electrically insulate the positive electrode sheet 110 from the negative electrode sheet 120.

Also, the positive electrode sheet 110 and the negative electrode sheet 120 are alternately stacked and wound together with the separator 140 and may be formed in a roll shape. Here, the electrode assembly 100 may be, for example, wound in a circular or oval shape so as to be formed in a jelly roll type.

Referring to FIGS. 3 to 5, the positive electrode sheet 110 comprises a positive electrode active material portion 112 that is an area on which a positive electrode active material is stacked on a positive electrode collector 111 and a positive electrode non-coating portion 113 that is an area on which a positive electrode active material is not stacked. Here, the positive electrode sheet 110 may be disposed, for example, in the form of a sheet.

For example, the positive electrode collector 111 may be provided as foil made of an aluminum (Al) material.

The positive electrode active material portion 112 may comprise a positive electrode active material stacked on one or more surfaces of one surface 110c or the other surface 110d of the positive electrode sheet 110. Here, the positive electrode active material portion 112 may be disposed, for example, on both surfaces of the positive electrode sheet 120. Also, the positive electrode active material portion 112 may further comprise a binder and a conductive material in addition to the positive electrode active material.

The positive electrode active material may comprise lithium manganese oxide, lithium cobalt oxide, lithium nickel oxide, lithium iron phosphate, or a compound containing at least one of these and mixtures thereof.

For another example, the positive electrode active material may comprise a Hi Ni-based positive electrode material. Here, the Hi Ni-based positive electrode material may comprise one or more of a LiNiMnCoO-based material, a LiNiCoAl-based material, and a LiMiMnCoAl-based material.

For example the binder may comprise one of polyfluoro vinylidene, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, and fluoro rubber.

For example, the conductive material may comprise one of: graphite; carbon black such as acetylene black, Ketjen black, channel black, furnace black, lamp black, and thermal black; conductive fibers such as carbon fiber and metal fiber; metal powder such as carbon fluorine, aluminum, and nickel powder; conductive whisker such as zinc oxide and potassium titanate; conductive oxide such as titanium oxide; and polyphenylene derivatives.

The positive electrode non-coating portion 113 is divided into two portions spaced apart from each other and thus comprises a first positive electrode non-coating portion 113a and a second positive electrode non-coating portion 113b. Here, the positive electrode non-coating portion 113 may be disposed on at least one surface of both surfaces of the positive electrode sheet 110.

The first positive electrode non-coating portion 113a and the second positive electrode non-coating portion 113b are disposed between both sides in a longitudinal direction of the positive electrode sheet 110.

Here, for example, the first positive electrode non-coating portion 113a may be disposed close to one side portion 110a of the positive electrode sheet 110, and the second positive electrode non-coating portion 113b may be disposed close to the other side portion 110b of the positive electrode sheet 110.

Also, the first positive electrode non-coating portion 113a may be disposed at a side of a winding outer portion, and the second positive electrode non-coating portion 113b may be disposed at a side of a winding central portion when the positive electrode sheet 110 is wound. The present invention is not necessarily limited thereto. For example, the first positive electrode non-coating portion 113a may be disposed at the side of the winding central portion, and the second positive electrode non-coating portion 113b may be disposed at the side of the winding outer portion when the positive electrode sheet 110 is wound.

The positive electrode tab 150 is provided on the positive electrode non-coating portion 113 of the positive electrode sheet 110. Here, one end of the positive electrode tab 150 may be attached and fixed to the positive electrode non-coating portion 113, and the other end of the positive electrode tab 150 may protrude from the positive electrode sheet 110.

Also, the positive electrode tab 150 comprises a first positive electrode tab 151 provided on the first positive electrode non-coating portion 113a and a second positive electrode tab 152 provided on the second positive electrode non-coating portion 113b. Here, although the first positive electrode tab 151 and the second positive electrode tab 152 are illustrated as being disposed on the other surface 110d of the positive electrode sheet 110 in FIG. 3, the present invention is not necessarily limited thereto. For example, the first positive electrode tab 151 and the second positive electrode tab 152 may be disposed on one surface 110c or the other surface 110d of the positive electrode sheet 110, respectively. Here, for another example, the first positive electrode tab 151 and the second positive electrode tab 152 may be disposed on the one surface 110c of the positive electrode sheet 110.

Referring to FIG. 1, for example, the first positive electrode tab 151 and the second positive electrode tab 152 may be disposed at both sides of a winding central axis C in the wound electrode assembly 100.

Referring to FIG. 2, in the positive electrode tab 150, a first positive electrode tab 151' and a second positive electrode tab 152 may be disposed at one side with respect to the winding central axis C in an electrode assembly 100' that is wound according to another embodiment. That is, in the winding central axis C, the first positive electrode tab 151' and the second positive electrode tab 152 may be sequentially arranged in a direction of an outer circumferential surface of the electrode assembly 100'. Here, the first positive electrode tab 151' and the second positive electrode tab 152 may be arranged on a line extending in a direction perpendicular to the winding central axis C.

Referring to FIGS. 3 to 5, the negative electrode sheet 120 comprises a negative electrode active material portion 122 that is an area on which a negative electrode active material is stacked on the negative electrode collector 121 and a negative electrode non-coating portion 123 that is an area on which the negative electrode active material is not stacked. Here, the negative electrode sheet 120 may is provided in, for example, the form of a sheet.

For example, the negative electrode collector 121 may be foil made of a copper (Cu) or nickel (Ni) material.

The negative electrode active material portion 122 may comprise a negative electrode active material stacked on one or more of one surface 120c or the other surface 120d of the negative electrode sheet 120. Here, the negative electrode active material portion 122 may be disposed on, for example, both surfaces of the negative electrode sheet 120. Also, the negative electrode active material portion 122 may further comprise a binder and a conductive material in addition to the negative electrode active material.

For example, the negative electrode active material may be made of a material comprising synthetic graphite.

For another example, the negative electrode active material may comprise lithium a metal, a lithium alloy, carbon, petroleum coke, activated carbon, graphite, a silicon compound, a tin compound, a titanium compound, or an alloy thereof.

The negative electrode non-coating portion 123 comprises a first negative electrode non-coating portion 123a disposed between both sides in a longitudinal direction of the negative electrode sheet 120 and second and third negative electrode non-coating portions 123b and 123c disposed at both sides of the negative electrode sheet 120. Here, the negative electrode non-coating portion 123 may be disposed on at least one surface of both surfaces of the negative electrode sheet 120.

Referring to FIGS. 3, 5, and 6, the first positive electrode non-coating portion 113a and the first negative electrode non-coating portion 123a are disposed at positions corresponding to each other.

Referring to FIGS. 3 to 5, the negative electrode tab 160 is disposed on the negative electrode non-coating portion 123. Here, one end of the negative electrode tab 160 may be attached and fixed to the negative electrode non-coating portion 123, and the other end of the negative electrode tab 160 may protrude from the negative electrode sheet 120.

Also, the negative electrode tab 160 comprise a first negative electrode tab 161 provided on the first negative electrode non-coating portion 123a, a second negative electrode tab 162 provided on the second negative electrode non-coating portion 123b, and a third negative electrode tab 163 disposed on the third negative electrode non-coating portion 123c. Here, although the first negative electrode tab 161 and the second negative electrode tab 162 are illustrated as being disposed on the one surface 120c of the negative electrode sheet 120 in FIG. 3, the present invention is not necessarily limited thereto. For example, the first negative electrode tab 161, the second negative electrode tab 162, and the third negative electrode tab 163 may be disposed on the one surface 120c or the other surface 120d of the negative electrode sheet 120, respectively. Here, for another example, the first negative electrode tab 161 and the second negative electrode tab 162 may be disposed on the other surface 120d of the negative electrode sheet 120, and the third negative electrode tab 163 may be disposed on one surface 120c of the negative electrode sheet 120.

Referring to FIGS. 1, 3, and 6, the separator 140 is made of an insulation material and alternately stacked with the positive electrode sheet 110 and the negative electrode sheet 120. Here, the separator 140 may be disposed between the positive electrode sheet 110 and the negative electrode sheet 120 and on outer surfaces of the positive electrode sheet 110 and the negative electrode sheet 120.

Also, the separator 140 may be made of, for example, a material having uniform fine pores. Here, the separator 140 may be, for example, a multi-layer film produced by microporous polyethylene, polypropylene, or a combination thereof or a polymer film for solid polymer electrolytes or gel-type polymer electrolytes such as polyvinylidene fluoride, polyethylene oxide, polyacrylonitrile, or polyvinylidene fluoride hexafluoropropylene copolymers.

Also, the separator 140 may comprise a first separator 141 disposed between the one surface 110c of the positive electrode sheet 110 and the other surface 120d of the negative electrode sheet 120 and a second separator 142 disposed on the one surface 120c of the negative electrode sheet 120.

Referring to FIGS. 1, 4, and 5, the first positive electrode tab 151 and the first negative electrode tab 161 may be disposed so as not to overlap each other with respect to a direction in which the positive electrode sheet 110 and the negative electrode sheet 120 face each other. Here, the direction in which the positive electrode sheet 110 and the negative electrode sheet 120 face each other may be, for example, a side direction S of the winding central axis C.

Also, the first positive electrode tab 151 may protrude in one side direction C1 with respect to a direction parallel to the winding central axis C, which is a central axis around which the electrode assembly 100 is wound, and the first negative electrode tab 161 may protrude in the other side direction C2 with respect to the direction parallel to the winding central axis C. Here, referring to FIG. 1, for example, the first positive electrode tab 151 may protrude upward from the electrode assembly 100 so as to be connected to a cap assembly 12, and the first negative electrode tab 161 may protrude downward from the electrode assembly 100 so as to be connected to an inner bottom surface of the battery case 11.

Also, ends of the first positive electrode tab 151 and the first negative electrode tab 161 may be spaced a predetermined distance from each other with respect to the direction parallel to the winding central axis C so as not to overlap each other.

Referring to FIGS. 1, 3, and 6, one surface 110c and 120c of both surfaces of each of the positive electrode sheet 110 and the negative electrode sheet 120 may disposed inward S1 during the winding, and the other surface 110d and 120d of both surface of each of the positive electrode sheet 110 and the negative electrode sheet 120 may be disposed outward S2 from the winding side. Here, the first positive electrode tab 151 may be disposed on the other surface 110d of the positive electrode sheet 110, and the first negative electrode tab 161 may be disposed on the one surface 120c of the negative electrode sheet 120.

Also, in the positive electrode sheet 110 and the negative electrode sheet 120, for example, the one side portions110a and 120a thereof may be wound to be disposed at the winding outer portion, and the other side portions 110b and 120b may be disposed at the winding central portion. Here, the positive electrode sheet 110 and the negative electrode sheet 120 may be wound around the other side portions 110b and 120b. Here, the winding central portion may be a central region after the positive electrode sheet 110 and the negative electrode sheet 120 are wound, and the winding outer portion may be an outer region after the positive electrode sheet 110 and the negative electrode sheet 120 are wound. Here, referring to FIG. 3, a winding direction R of the positive electrode sheet 110 and the negative electrode sheet 120 may be, for example, a clockwise direction. That is, in the positive electrode sheet 110 and the negative electrode sheet 120, the one side portions 110a and 120a may be wound in a clockwise direction with respect to the other side portions 110b and 120b.

However, the present invention is not necessarily limited thereto. For another example, in the positive electrode sheet 110 and the negative electrode sheet 120, the one side portions 110a and 120a of both the sides may be wound to be disposed at the winding central portion, and the other side portions 110b and 120b may be disposed at the winding outer portion. Here, the positive electrode sheet 110 and the negative electrode sheet 120 may be wound around the one side portions 110a and 120a. That is, the positive electrode sheet 110 and the negative electrode sheet 120 may be wound in a direction opposite to that of the above-described example. Here, a winding direction R' of the positive electrode sheet 110 and the negative electrode sheet 120 may be, for example, a counterclockwise direction.

Also, the first positive electrode non-coating portion 113a and the second positive electrode non-coating portion 113b may be disposed between both sides of the positive electrode sheet 110, and the first positive electrode non-coating portion 113a may be disposed on the one side portion 110a of the positive electrode sheet 110.

Referring to FIGS. 3 and 4, in the electrode assembly 100 according to the first embodiment of the present invention, a positive electrode insulation tape 170 may be further attached to the positive electrode non-coating portion 113 to cover the positive electrode tab 150. A negative electrode insulation tape 180 is attached to the negative electrode non-coating portion 123 to cover the negative electrode tab 160. Here, the positive electrode insulation tape 170 made of an insulation material and a negative electrode insulation tape 180 made of an insulation material are provided to cover the positive electrode tab 150 and the negative electrode tab 160, thereby preventing the separator 140 from being ruptured by edges of the positive electrode tab 150 and the negative electrode tab 160 and also preventing short circuit from occurring due to direct contact between the positive electrode tab 150 and the negative electrode sheet 120 or direct contact between the negative electrode tab 160 and the positive electrode sheet 110 through the damaged portion when the separator is damaged.

The positive electrode insulation tape 170 may comprise a first positive electrode insulation tape 171 attached to the first positive electrode non-coating portion 113a to cover the first positive electrode tab 151 and a second positive electrode insulation tape 182 attached to the second positive electrode non-coating portion 113b to cover the second positive electrode tab 152.

The negative electrode insulation tape 180 comprises a first negative electrode insulation tape 181 attached to the first negative electrode non-coating portion 123a to cover the first negative electrode tab 161 A second negative electrode insulation tape 182 may be attached to the second negative electrode non-coating portion 123b to cover the second negative electrode tab 162, and a third negative electrode insulation tape 183 may be attached to the third negative electrode non-coating portion 123c to cover the third negative electrode tab 163. Also, the negative electrode insulation tape 180 may further comprise a fourth negative electrode insulation tape 184 attached to a surface opposite to the surface on which the second negative electrode tab 162 is disposed on the second negative electrode non-coating portion 123b. That is, the second negative electrode non-coating portion 123b may be disposed on both sides of the negative electrode sheet 120. Here, the second negative electrode tab 162 may be disposed on one surface of the second negative electrode non-coating portion 123b, and the fourth negative electrode insulation tape 184 may be disposed on the other surface of the second negative electrode non-coating portion 123b.

Also, each of the positive electrode insulation tape 170 and the negative electrode insulation tape 180 may comprise an electrical insulation material. Here, the positive electrode insulation tape 170 and the negative electrode insulation tape 180 may not have pores through which lithium ions are movable. Thus, the positive electrode insulation tape 170 and the negative electrode insulation tape 180 may be made of a material that is resistant to the physical damage and thus may not be damaged by the edges of the positive electrode tab 150 and the negative electrode tab 160. In addition, portions of the separator 140 facing the positive electrode tab 150 and the negative electrode tab 160 may be prevented from being damaged.

The positive electrode insulation tape 170 and the negative electrode insulation tape 180 may comprise, for example, a base material (not shown) and an adhesion layer (not shown) disposed on one surface of the base material.

Referring to FIGS. 3 and 6, in the electrode assembly 100 according to the first embodiment of the present invention, a lithium ion deposition prevention tape 190 is further attached on a portion of the positive electrode sheet 110 which faces the first negative electrode insulation tape 181 with the separator 140 therebetween. Here, the lithium ion deposition prevention tape 190 may be provided on, for example, the other surface 110d of the positive electrode sheet 110, particularly, disposed on a surface of the positive electrode active material 112 stacked between the one side portion 110a of the positive electrode sheet 110 and the first positive electrode non-coating portion 113a that is disposed close to the one side portion 110a of the positive electrode sheet 110. Here, the lithium ion deposition prevention tape 190 and the first negative electrode non-coating portion 123a may face each other with the second separator 142 therebetween. Also, the lithium ion deposition prevention tape 190 may be made of an electrical insulation material.

Thus, the lithium ion deposition prevention tape 190 is disposed on a portion of the positive electrode sheet 110 facing the first negative electrode non-coating portion 123a, to which the first negative electrode insulation tape 181 is attached, to prevent lithium ions, which are not exchanged, from being accumulated to be deposited during the charging and discharging.

That is, the lithium ion deposition prevention tape 190 is attached to the surface of the positive electrode active material portion 112 of the positive electrode sheet 110 facing the first negative electrode insulation tape 181 to prevent the lithium ions from being accumulated to be deposited on the portion at which the lithium ions are not exchanged by the first negative electrode insulation tape 181 when the lithium ion are exchanged to perform the charging and the discharging.

In more detail, the separator 140 may have a thin film form and be disposed between the positive electrode sheet 110 and the negative electrode sheet 120 to prevent the positive electrode sheet 110 and the negative electrode sheet 120 from directly contacting each other. Here, the lithium ions may move through the fin pores of the separator 140 to perform the charging and the discharging. Here, the first negative electrode insulation tape 181 is made of an insulation material having no fine pores, and thus, the lithium ions do not move therethrough. Here, the lithium ions that do not move by being blocked by the first negative electrode insulation tape 181 may be accumulated to be deposited on the surface of the positive electrode active material portion 112 of the positive electrode sheet 110 facing the first negative electrode insulation tape 181. Thus, in the electrode assembly 100 according to the first embodiment of the present invention, the lithium ion deposition prevention tape made of the insulation material may be attached to the surface of the positive electrode active material portion 112 of the positive electrode sheet 110 to prevent facing the first negative electrode insulation tape 181 to prevent the lithium ions from being accumulated on the surface of the positive electrode active material portion 112 facing the first negative electrode insulation tape 181.

The lithium ion deposition prevention tape 190 may be made of, for example, polyimide (PI).

Also, the lithium ion deposition prevention tape 190 may comprise, for example, a base material (not shown) and an adhesion layer (not shown) disposed on one surface of the base material.

Referring to FIG. 3, the electrode assembly 100 according to the first embodiment of the present invention configured as described above may reduce resistance by adding the first negative electrode tab 161 such that the number of negative electrode tabs 160 is greater than that of the positive electrode tabs 150.

Here, the first negative electrode non-coating portion 123a may be additionally provided to attach the first negative electrode tab 161, and the first negative electrode non-coating portion 123a may be disposed to correspond to the first positive electrode non-coating portion 113a on which the first positive electrode tab 151 is disposed, thereby preventing or significantly reducing the additional loss of the battery capacity. That is, when the negative electrode non-coating portion is additionally provided, if the positive electrode non-coating portion is additionally provided on the positive electrode sheet 110 to correspond to the formation of the first negative electrode non-coating portion 123a, the positive electrode active material portion 122 may be reduced to decrease in battery capacity. Therefore, the first negative electrode non-coating portion 123a may match the first positive electrode non-coating portion 113a on which the first positive electrode tab 151 is disposed so that the positive electrode non-coating portion is additionally provided, thereby significantly reducing or preventing the decrease of the battery capacity.

Hereinafter, an electrode assembly according to a second exemplary embodiment of the present invention will be described.

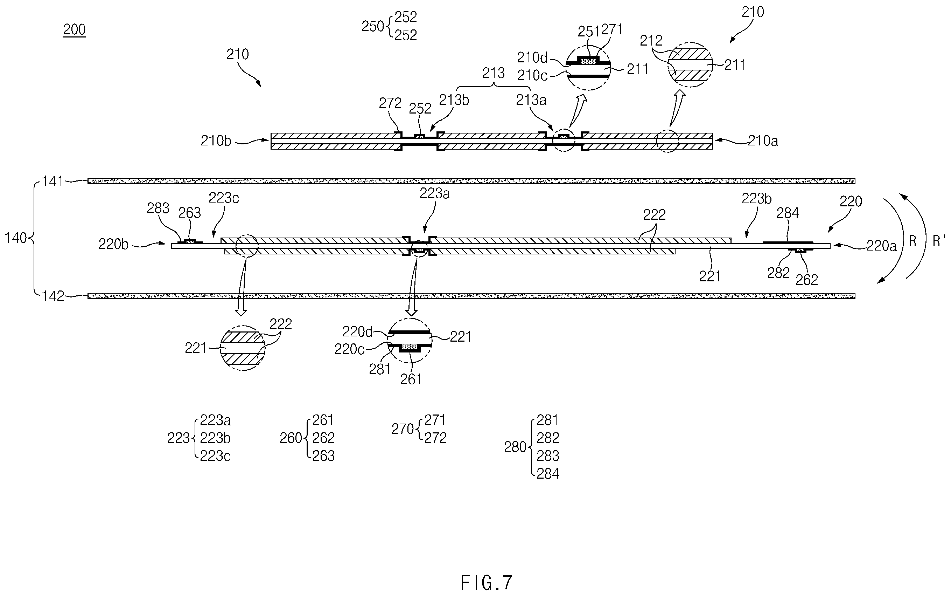

FIG. 7 is a front view illustrating an unfolded state before an electrode assembly is wound according to a second embodiment of the present invention.

Referring to FIG. 7, an electrode assembly 200 according to a second embodiment of the present invention comprises a positive electrode sheet 210 comprising a positive electrode active material portion 212 and a positive electrode non-coating portion 213, a positive electrode tab 250 provided on the positive electrode non-coating portion 213, a negative electrode sheet 220 comprising a negative electrode active material portion 222 and a negative electrode non-coating portion 223, a negative electrode tab 260 provided on the negative electrode non-coating portion 223, and a separator 140 provided between the positive electrode sheet 210 and the negative electrode sheet 220.

The electrode assembly 200 according to the second embodiment of the present invention is different from the electrode assembly 100 according to the first embodiment of the present invention in positions of the positive electrode non-coating portion 213 and the negative electrode non-coating portion 223. Thus, this embodiment briefly describes the contents overlapping with the above-described embodiment and will be described based on the differences.

In more detail, the positive electrode sheet 210 may comprise a positive electrode active material portion 212 that is an area on which a positive electrode active material is stacked on a positive electrode collector 211 and a positive electrode non-coating portion 213 that is an area on which the positive electrode active material is not stacked.

The positive electrode non-coating portion 213 may be divided into two portions spaced apart from each other and thus comprises a first positive electrode non-coating portion 213a and a second positive electrode non-coating portion 213b. Here, the positive electrode non-coating portion 213 may be disposed on at least one surface of both surfaces of the positive electrode sheet 210.

The first positive electrode non-coating portion 213a and the second positive electrode non-coating portion 213b may be disposed between both sides in a longitudinal direction of the positive electrode sheet 210.

Here, for example, the first positive electrode non-coating portion 213a may be disposed close to the other side portion 210b of the positive electrode sheet 210, and the second positive electrode non-coating portion 213b may be disposed close to one side portion 210a of the positive electrode sheet 210.

Also, the first positive electrode non-coating portion 213a may be disposed at a side of a winding outer portion, and the second positive electrode non-coating portion 213b may be disposed at a side of a winding central portion when the positive electrode sheet 210 is wound. The present invention is not necessarily limited thereto. For example, the first positive electrode non-coating portion 213a may be disposed at the side of the winding central portion, and the second positive electrode non-coating portion 213b may be disposed at the side of the winding outer portion when the positive electrode sheet 210 is wound.

The positive electrode tab 250 is provided on the positive electrode non-coating portion 213 of the positive electrode sheet 210. Here, one end of the positive electrode tab 250 may be attached and fixed to the positive electrode non-coating portion 213, and the other end of the positive electrode tab 150 may protrude from the positive electrode sheet 210.

Also, the positive electrode tab 250 may comprise a first positive electrode tab 251 provided on the first positive electrode non-coating portion 213a and a second positive electrode tab 252 provided on the second positive electrode non-coating portion 213b.

The negative electrode sheet 220 may comprise a negative electrode active material portion 222 that is an area on which a negative electrode active material is stacked on the negative electrode collector 221 and a negative electrode non-coating portion 223 that is an area on which the negative electrode active material is not stacked.

The negative electrode non-coating portion 223 comprises a first negative electrode non-coating portion 223a disposed between both sides in a longitudinal direction of the negative electrode sheet 220 and second and third negative electrode non-coating portions 223b and 223c disposed at both sides of the negative electrode sheet 220. Here, the negative electrode non-coating portion 223 may be disposed on at least one surface of both surfaces of the negative electrode sheet 220.

The second positive electrode non-coating portion 213b and the first negative electrode non-coating portion 223a are disposed corresponding to each other.

The negative electrode tab 260 is disposed on the negative electrode non-coating portion 223. Here, one end of the negative electrode tab 260 may be attached and fixed to the negative electrode non-coating portion 223, and the other end of the negative electrode tab 160 may protrude from the negative electrode sheet 220.

Also, the negative electrode tab 260 comprises a first negative electrode tab 261 provided on the first negative electrode non-coating portion 223a, a second negative electrode tab 262 provided on the second negative electrode non-coating portion 123b, and a third negative electrode tab 263 disposed on the third negative electrode non-coating portion 123c.

In the electrode assembly 200 according to the second embodiment of the present invention, a positive electrode insulation tape 270 may be further attached to the positive electrode non-coating portion 213 to cover the positive electrode tab 250, and a negative electrode insulation tape 280 may be further attached to the negative electrode non-coating portion 223 to cover the negative electrode tab 260.

The positive electrode insulation tape 270 may comprise a first positive electrode insulation tape 271 attached to the first positive electrode non-coating portion 213a to cover the first positive electrode tab 251 and a second positive electrode insulation tape 272 attached to the second positive electrode non-coating portion 213b to cover the second positive electrode tab 252.

The negative electrode insulation tape 280 comprises a first negative electrode insulation tape 281 attached to the first negative electrode non-coating portion 223a to cover the first negative electrode tab 261. A second negative electrode insulation tape 282 may be attached to the second negative electrode non-coating portion 223b to the second negative electrode tab 262, and a third negative electrode insulation tape 283 may be attached to the third negative electrode non-coating portion 223c to cover the third negative electrode tab 263. Also, the negative electrode insulation tape 280 may further comprise a fourth negative electrode insulation tape 284 attached to a surface opposite to the surface on which the second negative electrode tab 262 is disposed on the second negative electrode non-coating portion 223b. That is, the second negative electrode non-coating portion 223b may be disposed on both sides of the negative electrode sheet 220. Here, the second negative electrode tab 262 may be disposed on one surface of the second negative electrode non-coating portion 223b, and the fourth negative electrode insulation tape 284 may be disposed on the other surface of the second negative electrode non-coating portion 223b.

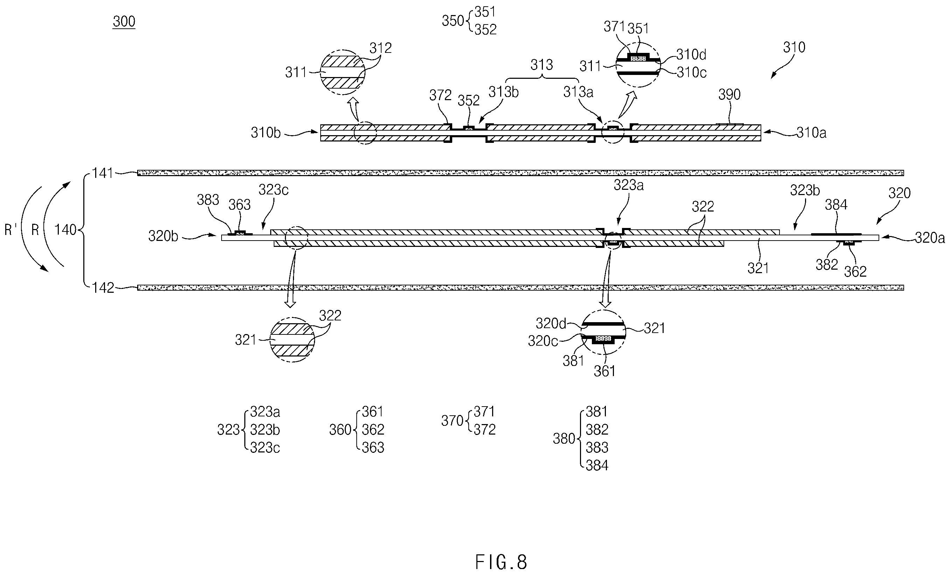

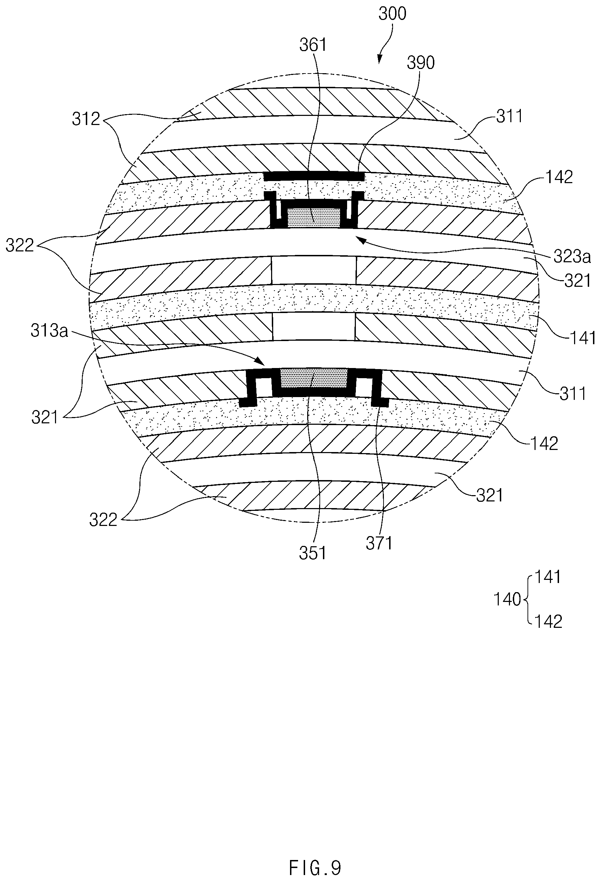

Hereinafter, an electrode assembly according to a third embodiment will be described with reference to FIGS. 8 and 9.

FIG. 8 is a front view illustrating an unfolded state before an electrode assembly is wound according to a third embodiment of the present invention, and FIG. 9 is a front view illustrating a main part in the state in which the electrode assembly is wound according to the third embodiment of the present invention.

Referring to FIGS. 8 and 9, an electrode assembly 300 according to a third embodiment of the present invention comprises a positive electrode sheet 310 comprising a positive electrode active material portion 312 and a positive electrode non-coating portion 313, a positive electrode tab 350 provided on the positive electrode non-coating portion 313, a negative electrode sheet 320 comprising a negative electrode active material portion 322 and a negative electrode non-coating portion 323, a negative electrode tab 360 provided on the negative electrode non-coating portion 323, and a separator 140 provided between the positive electrode sheet 310 and the negative electrode sheet 320.

The electrode assembly 300 according to the third embodiment of the present invention is different from the electrode assembly 100 according to the first embodiment and the electrode assembly according to the second embodiment in winding shape. Thus, this embodiment briefly describes the contents overlapping with the above-described embodiment and will be described based on the differences.

In more detail, the positive electrode sheet 310 comprises a positive electrode active material portion 312 that is an area on which a positive electrode active material is stacked on a positive electrode collector 311 and a positive electrode non-coating portion 113 that is an area on which a positive electrode active material is not stacked.

The positive electrode non-coating portion 313 may be divided into two portions spaced apart from each other and thus may comprise a first positive electrode non-coating portion 313a and a second positive electrode non-coating portion 313b. Here, the positive electrode non-coating portion 313 may be disposed on at least one surface of both surfaces of the positive electrode sheet 310.

The first positive electrode non-coating portion 313a and the second positive electrode non-coating portion 313b may be disposed between both sides in a longitudinal direction of the positive electrode sheet 310.

Here, for example, the first positive electrode non-coating portion 313a may be disposed close to one side portion 310a of the positive electrode sheet 310, and the second positive electrode non-coating portion 113b may be disposed close to the other side portion 310b of the positive electrode sheet 310.

Also, the first positive electrode non-coating portion 313a may be disposed at a side of a winding central portion, and the second positive electrode non-coating portion 313b may be disposed at a side of a winding outer portion when the positive electrode sheet 310 is wound. However, the present invention is not necessarily limited thereto. For example, the first positive electrode non-coating portion 313a may be disposed at the side of the winding outer portion, and the second positive electrode non-coating portion 313b may be disposed at the side of the winding central portion when the positive electrode sheet 310 is wound.

The positive electrode tab 350 is provided on the positive electrode non-coating portion 313 of the positive electrode sheet 310. Here, one end of the positive electrode tab 350 may be attached and fixed to the positive electrode non-coating portion 313, and the other end of the positive electrode tab 150 may protrude from the positive electrode sheet 310.

Also, the positive electrode tab 350 comprises a first positive electrode tab 351 provided on the first positive electrode non-coating portion 313a and a second positive electrode tab 352 provided on the second positive electrode non-coating portion 313b. Here, for example, the first positive electrode tab 351 and the second positive electrode tab 352 may be disposed on the other surface 310d of the positive electrode sheet 310.

Here, although the first positive electrode tab 351 and the second positive electrode tab 352 are illustrated as being disposed on the other surface 110d of the positive electrode sheet 310 in FIG. 9, the present invention is not necessarily limited thereto. For example, the first positive electrode tab 351 and the second positive electrode tab 352 may be disposed on one surface 310c or the other surface 310d of the positive electrode sheet 310, respectively. Here, for another example, the first positive electrode tab 351 and the second positive electrode tab 352 may be disposed on the one surface 310c of the positive electrode sheet 310.

The negative electrode sheet 320 comprises a negative electrode active material portion 322 that is an area on which a negative electrode active material is stacked on the negative electrode collector 321 and a negative electrode non-coating portion 323 that is an area on which the negative electrode active material is not stacked.

The negative electrode non-coating portion 323 comprises a first negative electrode non-coating portion 323a disposed between both sides in a longitudinal direction of the negative electrode sheet 320 and second and third negative electrode non-coating portions 323b and 323c disposed at both sides of the negative electrode sheet 320. Here, the negative electrode non-coating portion 323 may be disposed on at least one surface of both surfaces of the negative electrode sheet 320.

The first positive electrode non-coating portion 313b and the first negative electrode non-coating portion 323a are disposed corresponding to each other.

The negative electrode tab 360 is disposed on the negative electrode non-coating portion 323. Here, one end of the negative electrode tab 360 may be attached and fixed to the negative electrode non-coating portion 323, and the other end of the negative electrode tab 160 may protrude from the negative electrode sheet 320.

Also, the negative electrode tab 360 comprises a first negative electrode tab 361 provided on the first negative electrode non-coating portion 323a, a second negative electrode tab 362 provided on the second negative electrode non-coating portion 323b, and a third negative electrode tab 363 disposed on the third negative electrode non-coating portion 323c. Here, although the first negative electrode tab 361 and the second negative electrode tab 362 are illustrated as being disposed on the one surface 320c of the negative electrode sheet 320 in FIG. 8, the present invention is not necessarily limited thereto. For example, the first negative electrode tab 361, the second negative electrode tab 362, and the third negative electrode tab 363 may be disposed on the one surface 320c or the other surface 320d of the negative electrode sheet 320, respectively. Here, for another example, the first negative electrode tab 361 and the second negative electrode tab 362 may be disposed on the other surface 320d of the negative electrode sheet 320, and the third negative electrode tab 363 may be disposed on the one surface 320c of the negative electrode sheet 320.

The one surfaces 310c and 320c of both the surfaces of the positive electrode sheet 310 and the negative electrode sheet 320 may be disposed outward during the winding, and the other surfaces 310d and 320d may be disposed inward from the winding side. Here, the first positive electrode tab 351 may be disposed on the other surface 110d of the positive electrode sheet 310, and the first negative electrode tab 361 may be disposed on the one surface 320c of the negative electrode sheet 320.

Also, in the positive electrode sheet 310 and the negative electrode sheet 320, for example, the other side portions 310b and 320b of both the side portions may be wound to be disposed at a winding central portion, and one side portions 310a and 320a may be wound to be disposed at a winding outer portion. Here, the positive electrode sheet 310 and the negative electrode sheet 320 may be wound from the other side portions 310b and 320b so as to be wound in direction of the one side portions 310a and 320a, i.e., wound in a clockwise direction. Here, the winding direction R of the positive electrode sheet 310 and the negative electrode sheet 320 may be, for example, a clockwise direction.

However, the present invention is not necessarily limited thereto. For another example, in the positive electrode sheet 310 and the negative electrode sheet 320, the one side portions 310a and 320a of both the sides may be wound to be disposed at the winding central portion, and the other side portions 310a 320a be disposed at the winding outer portion. Here, the positive electrode sheet 310 and the negative electrode sheet 320 may be wound around the other side portions 310b and 320b. That is, the positive electrode sheet 310 and the negative electrode sheet 320 may be wound in a direction opposite to that of the above-described example. Here, a winding direction R' of the positive electrode sheet 310 and the negative electrode sheet 320 may be, for example, a counterclockwise direction.

In the electrode assembly 300 according to the third embodiment of the present invention, a positive electrode insulation tape 370 may be further attached to the positive electrode non-coating portion 313 to cover the positive electrode tab 350, and a negative electrode insulation tape 380 may be further attached to the negative electrode non-coating portion 323 to cover the negative electrode tab 360.

The positive electrode insulation tape 370 may comprise a first positive electrode insulation tape 371 attached to the first positive electrode non-coating portion 313a to cover the first positive electrode tab 351 and a second positive electrode insulation tape 372 attached to the second positive electrode non-coating portion 313b to cover the second positive electrode tab 352.

The negative electrode insulation tape 380 may comprise a first negative electrode insulation tape 381 attached to the first negative electrode non-coating portion 323a to cover the first negative electrode tab 361, a second negative electrode insulation tape 382 attached to the second negative electrode non-coating portion 323b to the second negative electrode tab 362, and a third negative electrode insulation tape 383 attached to the third negative electrode non-coating portion 323c to cover the third negative electrode tab 363. Also, the negative electrode insulation tape 380 may further comprise a fourth negative electrode insulation tape 384 attached to a surface opposite to the surface on which the second negative electrode tab 362 is disposed on the second negative electrode non-coating portion 323b. That is, the second negative electrode non-coating portion 323b may be disposed on both sides of the negative electrode sheet 320. Here, the second negative electrode tab 362 may be disposed on one surface of the second negative electrode non-coating portion 323b, and the fourth negative electrode insulation tape 384 may be disposed on the other surface of the second negative electrode non-coating portion 323b.

In the electrode assembly 300 according to the first embodiment of the present invention, a lithium ion deposition prevention tape 390 may be further attached on a portion of the positive electrode sheet 310 which faces the first negative electrode insulation tape 381 with the separator 140 therebetween.

Hereinafter, a secondary battery comprising the electrode assembly according to an embodiment of the present invention will be described with reference to FIGS. 1 to 6.

Referring to FIGS. 1 and 2, a secondary battery 10 according to an embodiment of the present invention comprises an electrode assembly 100 and a battery case 11 accommodating the electrode assembly 100. Here, the electrode assembly 100 comprises a positive electrode sheet 110 comprising a positive electrode active material portion 112 and a positive electrode non-coating portion 113, a positive electrode tab 150 provided on the positive electrode non-coating portion 113, a negative electrode sheet 120 comprising a negative electrode active material portion 122 and a negative electrode non-coating portion 123, a negative electrode tab 160 provided on the negative electrode non-coating portion 123, and a separator 140 provided between the positive electrode sheet 110 and the negative electrode sheet 120.

The secondary battery according to an embodiment of the present invention relates to the secondary battery 10 comprising the electrode assembly according to the first to third embodiments. This embodiment briefly describes the contents overlapping with the above-described embodiment, and will be described based on the differences.

In more detail, referring to FIG. 1, in the secondary battery 10 according to an embodiment of the present invention, the battery case 11 may have an accommodation part 11a that accommodates an electrolyte and the electrode assembly 100 therein. Here, the battery case 11 may be opened in a shape in which the accommodation part 11a is opened to one side. Also, a cap assembly 12 may be further provided to cover the opened one side of the battery case 11. Here, the battery case 11 may have, for example, an oval shape or a cylindrical shape.

Also, the electrode assembly 100 may be a chargeable and dischargeable power generation element and have a structure in which an electrode 130 and a separator 140 are combined and alternately stacked. Here, the electrode assembly 100 may be an electrode assembly for a lithium ion secondary battery and may have a wound shape.

The electrode 130 may comprise the positive electrode sheet 110 and the negative electrode sheet 120. Also, the separator 140 may electrically insulate the positive electrode sheet 110 from the negative electrode sheet 120.

Referring to FIGS. 1 to 4, the positive electrode sheet 110 comprises a positive electrode active material portion 112 that is an area on which a positive electrode active material is stacked on a positive electrode collector 111 and a positive electrode non-coating portion 113 that is an area on which a positive electrode active material is not stacked. Here, the positive electrode non-coating portion 113 may be divided into two portions spaced apart from each other on the positive electrode sheet 110 and thus comprises a first positive electrode non-coating portion 113a and a second positive electrode non-coating portion 113b.

The positive electrode tab 150 is provided on the positive electrode non-coating portion 113 of the positive electrode sheet 110. Here, one end of the positive electrode tab 150 may be attached and fixed to the positive electrode non-coating portion 113, and the other end of the positive electrode tab 150 may protrude from the positive electrode sheet 110. Here, the positive electrode tab 150 may protrude toward a bottom surface of the cap assembly 12 or the battery case 11.

Also, the positive electrode tab 150 comprises a first positive electrode tab 151 provided on the first positive electrode non-coating portion 113a and a second positive electrode tab 152 provided on the second positive electrode non-coating portion 113b.

The negative electrode sheet 120 comprises a negative electrode active material portion 122 that is an area on which a negative electrode active material is stacked on the negative electrode collector 121 and a negative electrode non-coating portion 123 that is an area on which the negative electrode active material is not stacked. Here, The negative electrode non-coating portion 123 comprises a first negative electrode non-coating portion 123a disposed between both sides of the negative electrode sheet 120 and second and third negative electrode non-coating portions 123b and 123c disposed at both sides of the negative electrode sheet 120. Here, the first negative electrode non-coating portion 123a may be disposed on one side portion 120a of the negative electrode sheet 120, and the second negative electrode non-coating portion 123b may be disposed on the other side portion 120b of the negative electrode sheet 120.

The negative electrode tab 160 is disposed on the negative electrode non-coating portion 123. Here, one end of the negative electrode tab 160 may be attached and fixed to the negative electrode non-coating portion 123, and the other end of the negative electrode tab 160 may protrude from the negative electrode sheet 120. Here, the negative electrode tab 160 may protrude toward a bottom surface of the cap assembly 12 or the battery case 11.

Also, the negative electrode tab 160 comprises a first negative electrode tab 161 provided on the first negative electrode non-coating portion 123a, a second negative electrode tab 162 provided on the second negative electrode non-coating portion 123b, and a third negative electrode tab 163 disposed on the third negative electrode non-coating portion 123c.

Here, the first positive electrode non-coating portion 213b and the first negative electrode non-coating portion 123a are disposed corresponding to each other.

Also, referring to FIG. 5, the first positive electrode tab 151 and the first negative electrode tab 161 may be disposed so as not to overlap each other with respect to a direction in which the positive electrode sheet 110 and the negative electrode sheet 120 face each other.

Referring to FIGS. 3 and 6, in the electrode assembly 100 of the secondary battery 10 according to an embodiment of the present invention, a first negative electrode insulation tape 181 may be further attached to the first negative electrode non-coating portion 123a to cover the first negative electrode tab 161.

Also, in the electrode assembly 100 of the secondary battery 10 according to an embodiment of the present invention, a lithium ion deposition prevention tape 190 may be further attached to a portion of the positive electrode sheet 10 facing the first negative electrode non-coating portion 123a.

Thus, the lithium ion deposition prevention tape 190 may be disposed on a portion of the positive electrode sheet 110 facing the first negative electrode non-coating portion 123a, to which the first negative electrode insulation tape 181 is attached, to prevent lithium ions, which are not exchanged, from being accumulated to be deposited during the charging and discharging.

That is, the lithium ion deposition prevention tape 190 may be attached to the surface of the positive electrode active material portion 112 of the positive electrode sheet 110 facing the first negative electrode insulation tape 181 to prevent the lithium ions from being accumulated and deposited on the portion at which the lithium ions are not exchanged by the first negative electrode insulation tape 181 when the lithium ion are exchanged to perform the charging and the discharging.

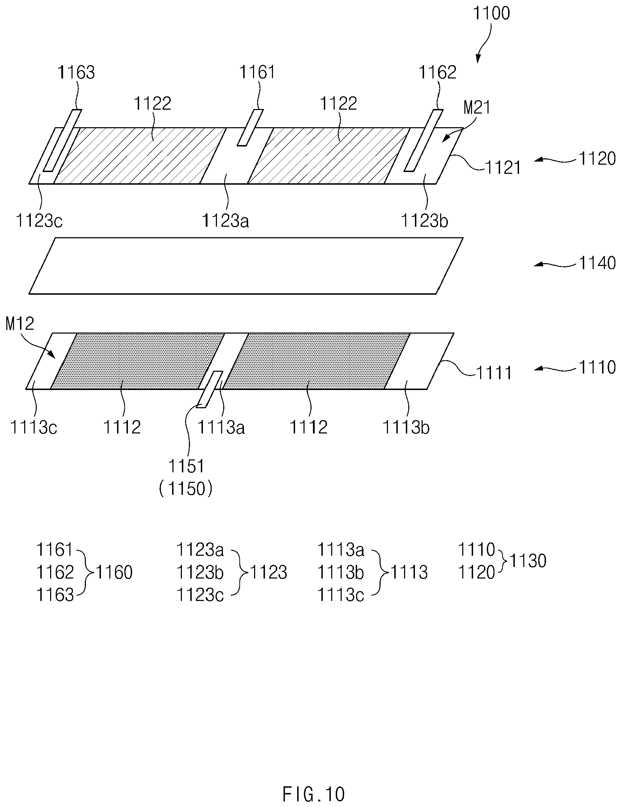

FIG. 10 is a perspective view illustrating an unfolded state before a positive electrode plate and a negative electrode plate are wound in an electrode assembly according to a fourth embodiment of the present invention.

Hereinafter, an electrode assembly according to a fourth embodiment will be described with reference to FIG. 10.

Referring to FIG. 10, an electrode assembly 1100 according to a fourth embodiment of the present invention comprises a positive electrode plate 1110 comprising a positive electrode active material portion 1112 and a positive electrode non-coating portion 1113, a positive electrode tab 1150 disposed on the positive electrode non-coating portion 1113, a negative electrode plate 1120 comprising a negative electrode active material portion 1122 and a negative electrode non-coating portion 1123, a negative electrode tab 1160 disposed on the negative electrode non-coating portion 1123, and a separator 1140 disposed between the positive electrode plate 1110 and the negative electrode plate 1120.

The electrode assembly 1100 may be a chargeable and dischargeable power generation element and have a structure in which an electrode 1130 and the separator 1140 are combined and alternately stacked. Here, the electrode assembly 1100 may be an electrode assembly for a lithium ion secondary battery and may have a wound shape.

The electrode 1130 comprises the positive electrode plate 1110 and the negative electrode 1120. Also, the separator 1140 separates the positive electrode plate 1110 and the negative electrode plate 1120 from each other so that the positive electrode plate 1110 and the negative electrode plate 1120 are electrically insulated from each other.

Also, the positive electrode plate 1110 and the negative electrode plate 1120 may be alternately stacked and wound together with the separator 1140 and may be provided in the form of a roll. Here, the electrode assembly 1100 may be, for example, wound in a circular or oval shape so as to be formed in a jelly roll type.

The positive electrode plate 1110 comprises a positive electrode collector 1111, a positive electrode active material portion 1112 that is an area on which a positive electrode active material is stacked on the positive electrode collector 1111, and a positive electrode non-coating portion 1113 that is an area on which the positive electrode active material is not stacked.

For example, the positive electrode collector 1111 may be provided as foil made of an aluminum (Al) material.

The positive electrode active material portion 1112 comprises a positive electrode active material stacked on a first surface M12 of the positive electrode collector 1111. Also, the positive electrode active material portion 1112 may further comprise a positive electrode active material stacked on a second surface of the positive electrode collector 1111. Also, the positive electrode active material portion 1112 may further comprise a binder and a conductive material in addition to the positive electrode active material.

For example, the positive electrode non-coating portion 1113 may be divided into two portions spaced apart from each other and thus comprises a first positive electrode non-coating portion 1113a and a second positive electrode non-coating portion 1113b. Here, the first positive electrode non-coating portion 1113a is disposed between both ends of the positive electrode plate 1110.

For another example, the positive electrode non-coating portion 1113 may be divided into three portions spaced apart from each other and thus comprises a first positive electrode non-coating portion 1113a and a second positive electrode non-coating portion 1113b. The positive electrode non-coating portion 1113 may comprise a third positive electrode non-coating portion 1113c. Here, the first positive electrode non-coating portion 1113a is disposed between both ends of the positive electrode plate 1110.

The positive electrode tab 1150 is disposed on the positive electrode non-coating portion 1113 of the positive electrode plate 1110. Also, the positive electrode tab 1150 comprises a first positive electrode tab 1151 disposed on the first positive electrode non-coating portion 113a. Here, one end of the first positive electrode tab 1151 may be attached and fixed to the first positive electrode non-coating portion 1113a, and the other end of the first positive electrode tab 1151 may protrude from the positive electrode plate 1110. Furthermore, the positive electrode tab 1150 may further comprise a second positive electrode tab (not shown) disposed on the second positive electrode non-coating portion 1113b.

The negative electrode plate 1210 comprises a negative electrode collector 1121, a negative electrode active material portion 1122 that is an area on which a negative electrode active material is stacked and a negative electrode non-coating portion 1123 that is an area on which the negative electrode active material is not stacked.

For example, the negative electrode collector 1121 may be foil made of a copper (Cu) or nickel (Ni) material.

The negative electrode active material portion 1122 comprises a negative electrode active material stacked on a first surface M21 of the negative electrode collector 1121. Here, the first surface M21 of the negative electrode collector is a surface facing the first surface M12 of the positive electrode collector 1111. That is, although the first surface M21 of the negative electrode collector 1122 is illustrated in the same direction as the first surface M12 of the positive electrode collector 1111, for convenience of description in FIG. 6, the first surface M21 of the negative electrode collector 1121 may be substantially a surface facing the first surface M12 of the positive electrode collector 1111. Also, the negative electrode active material portion 1122 may further comprise a negative electrode active material stacked on a second surface of the negative electrode collector 1121. Also, the negative electrode active material portion 1122 may further comprise a binder and a conductive material in addition to the negative electrode active material.

The negative electrode non-coating portion 1123 comprises a first negative electrode non-coating portion 1123a disposed between both ends of the negative electrode plate 1120 and second and third negative electrode non-coating portions 1123b and 1123c disposed at both ends of the negative electrode plate 1120.

Also, the first positive electrode non-coating portion 1113b and the first negative electrode non-coating portion 1123a are disposed corresponding to each other.

The negative electrode tab 1160 is disposed on the negative electrode non-coating portion 1123. Here, one end of the negative electrode tab 1160 may be attached and fixed to the negative electrode non-coating portion 1123, and the other end of the negative electrode tab 1160 may protrude from the negative electrode plate 1120. Also, the negative electrode tab 1160 may comprise a first negative electrode tab 1161 provided on the first negative electrode non-coating portion 1123a, a second negative electrode tab 1162 provided on the second negative electrode non-coating portion 1123b, and a third negative electrode tab 1163 disposed on the third negative electrode non-coating portion 1123c.

The separator 1140 is made of an insulation material and is alternately stacked together with the positive electrode plate 1110 and the negative electrode plate 1120. Here, the separator 1140 may be disposed between the positive electrode plate 1110 and the negative electrode plate 1120 and disposed on an outer surface of the positive electrode plate 1110 or the negative electrode plate 1120.

The first positive electrode tab 1151 and the first negative electrode tab 1161 may be disposed so as not to overlap each other with respect to a direction in which the positive electrode 1110 and the negative electrode 1120 face each other. Here, the direction in which the positive electrode 1110 and the negative electrode 1120 face each other may be, for example, a lateral direction of a winding central axis. Also, ends of the first positive electrode tab 1151 and the first negative electrode tab 1161 may be spaced a predetermined distance from each other with respect to the direction parallel to the winding central axis so as not to overlap each other.

In the electrode assembly 1100 according to the fourth embodiment of the present invention, a positive electrode insulation tape may be further attached to the positive electrode non-coating portion 1113 to cover the positive electrode tab 1150, and a negative electrode insulation tape may be further attached to the negative electrode non-coating portion 1123 to cover the negative electrode tab 1160. Here, the positive electrode insulation tape and the negative electrode insulation tape may be attached in the same manner as that in which the positive electrode insulation tape 170 and the negative electrode insulation tape 180 of the electrode assembly 100 according to the foregoing first embodiment of the present invention are attached.

The positive electrode insulation tape may comprise a first positive electrode insulation tape attached to the first positive electrode non-coating portion 1113a to cover the first positive electrode tab 1151.

The negative electrode insulation tape comprises a first negative electrode insulation tape attached to the first negative electrode non-coating portion 1213a to cover the first negative electrode tab 161. A second negative electrode insulation tape may be attached to the second negative electrode non-coating portion 1123b to cover the second negative electrode tab 1162, and a third negative electrode insulation tape may be attached to the third negative electrode non-coating portion 1123c to cover the third negative electrode tab 1163.

Also, each of the positive electrode insulation tape and the negative electrode insulation tape may comprise an electrical insulation material.

In the electrode assembly 1100 according to the fourth embodiment of the present invention, a lithium ion deposition prevention tape comprising an insulation material is further attached to a portion of the positive electrode plate 1110 facing the first negative electrode insulation tape with the separator therebetween. Here, the lithium ion deposition prevention tape may be attached in the same manner as that in which the lithium ion deposition prevention tape 190 of the electrode assembly 100 according to the foregoing first embodiment of the present invention are attached. Here, the lithium ion deposition prevention tape may be disposed on a surface of the positive electrode active material portion 1112 of the positive electrode plate 1110. Thus, the lithium ion deposition prevention tape 1190 may be disposed on a portion of the positive electrode plate 1110 facing the first negative electrode non-coating portion 1123a, to which the first negative electrode insulation tape is attached, to prevent lithium ions, which are not exchanged, from being accumulated to be deposited during the charging and discharging.

### <Manufacturing Example>

### 1-1 Manufacture of electrode assembly

A positive electrode non-coating portion was formed on each of two portions of a positive electrode sheet, which are spaced part from each other, to provide positive electrode tabs, and a negative electrode non-coating portion was formed on each of three portions of a negative electrode sheet, which are spaced apart from each other, to provide negative electrode tabs, thereby manufacturing an electrode assembly comprising the two positive electrode tabs and the three negative electrode tabs.

Here, a first positive electrode non-coating portion of the positive electrode non-coating portions disposed on the two portions of the positive electrode sheet and a first negative electrode non-coating portion formed between both side portions of the negative electrode sheet are formed at positions corresponding to each other.

### 1-2 Manufacture of secondary battery

The manufactured electrode assembly was accommodated together with an electrolyte in a battery case to manufacture a secondary battery.

### <Comparative Example>

A secondary battery was manufactured in the same manner as that of the manufacturing example except that a positive electrode non-coating portion was formed on each of two portions of a positive electrode sheet, which are spaced part from each other, to provide positive electrode tabs, and a negative electrode non-coating portion was formed on each of two portions of a negative electrode sheet, which are spaced apart from each other, to provide negative electrode tabs, thereby manufacturing an electrode assembly comprising the two positive electrode tabs and the two negative electrode tabs. Here, according to the comparative example, the negative electrode non-coating portion may be formed on the two portions of the negative electrode sheet, and thus, the first negative electrode non-coating portion formed between both side portions of the negative electrode sheet according to the manufacturing example was not formed.

### <Experimental Example>

Electricity was applied to the secondary battery to measure an effect of improving resistance.

As a result of measuring alternating current (AC) resistance, it was observed that the resistance value measured in the manufacturing example was reduced by about 20% when compared to that measured in the comparative example.

As a result, it may be seen that the resistance is significantly improved in the manufacturing example.

While the present invention has been particularly shown and described with reference to exemplary embodiments thereof, it is to be understood that the scope of the present invention is not limited to the electrode assembly and the secondary battery comprising the same according to the present invention. It will be understood by those of ordinary skill in the art that various changes in form and details may be made therein without departing from the scope of the invention as defined in the claims.

Furthermore, the scope of protection of the present invention will be clarified by the appended claims.

## Claims

1. An electrode assembly comprising:
a positive electrode sheet (110) comprising a positive electrode active material portion (112) that is an area on which a positive electrode active material is stacked on a positive electrode collector (111) and a positive electrode non-coating portion (113) that is an area on which the positive electrode active material is not stacked;
a positive electrode tab (150) disposed on the positive electrode non-coating portion (113);
a negative electrode sheet (120) comprising a negative electrode active material portion (122) that is an area on which a negative electrode active material is stacked on a negative electrode collector (121) and a negative electrode non-coating portion (123) that is an area on which the negative electrode active material is not stacked;
a negative electrode tab (160) disposed on the negative electrode non-coating portion; and
a separator (140) configured to insulate the positive electrode sheet and the negative electrode sheet from each other,
wherein the positive electrode non-coating portion (113) comprises a first positive electrode non-coating portion (113a) and a second positive electrode non-coating portion (113b), which are provided on two portions spaced apart from each other on the positive electrode sheet (110),
the negative electrode non-coating portion (123) comprises a first negative electrode non-coating portion (123a) disposed between both side portions of the negative electrode sheet (120) and second and third negative electrode non-coating portions (123b, 123c), which are respectively disposed on both side portions of the negative electrode sheet (120), and
the first positive electrode non-coating portion (113a) and the first negative electrode non-coating portion (123a) are disposed at positions corresponding to each other,
wherein the positive electrode tab (150) comprises a first positive electrode tab (151) disposed on the first positive electrode non-coating portion (113a) and a second positive electrode tab (152) disposed on the second positive electrode non-coating portion (113b), and
the negative electrode tab (160) comprises a first negative electrode tab (161) disposed on the first negative electrode non-coating portion (123a), a second negative electrode tab (162) disposed on the second negative electrode non-coating portion (123b), and a third negative electrode tab (163) disposed on the third negative electrode non-coating portion (123c),
the electrode assembly comprises an electrode assembly for a lithium ion secondary battery,
the positive electrode sheet (110), the separator (140), and the negative electrode sheet (120) are alternately stacked to be wound,
a first negative electrode insulation tape (181) is further attached to the first negative electrode non-coating portion (123a) to cover the first negative electrode tab (161), and
a lithium ion deposition prevention tape (190) is further attached to a surface of the positive electrode active material portion (112) of the positive electrode sheet (110) facing the first negative electrode insulation tape (181) to prevent lithium ions from being accumulated to be deposited when charging and discharging.

2. The electrode assembly of claim 1, wherein the separator (140) comprises an insulation material having pores through which the lithium ions moves, and
each of the first negative electrode insulation tape (181) and the lithium ion deposition prevention tape (190) comprises an insulation material.

3. The electrode assembly of claim 1, wherein, in each of the positive electrode sheet (110) and the negative electrode sheet (120), one side portion of both side portions is wound in a clockwise direction to be disposed at a winding outer portion, and the other side portion is disposed at a winding central portion, and
the first positive electrode non-coating portion (113a) and the second positive electrode non-coating portion (113b) are disposed between both the side portions on the positive electrode sheet (110), wherein the first positive electrode non-coating portion (113a) is disposed on a side of one side portion of the positive electrode sheet (110).

4. The electrode assembly of claim 3, wherein one surface of both surfaces of each of the positive electrode sheet (110) and the negative electrode sheet (120) is disposed inward during the winding, and the other surface is disposed outward from the winding side.

5. The electrode assembly of claim 1, wherein each of the positive electrode sheet (110) and the negative electrode sheet (120) is wound from the other side portion of both side portions thereof so as to be wound toward one side portion in a clockwise direction, wherein the other side portion is disposed at a winding central portion, and the one side portion is disposed at a winding outer portion, and
each of the first positive electrode non-coating portion (113a) and the second positive electrode non-coating portion (113b) is disposed between both sides portions on the positive electrode sheet (110), wherein the first positive electrode non-coating portion (113a) is disposed at a side of the one side portion of the positive electrode sheet (110).

6. The electrode assembly of claim 5, wherein one surface of both surfaces of each of the positive electrode sheet (110) and the negative electrode sheet (120) is disposed outward during the winding, and the other surface is disposed inward from the winding side.

7. The electrode assembly of claim 4 or 6, wherein the lithium ion deposition prevention tape (190) is disposed on the other surface of the positive electrode sheet,
wherein the lithium ion deposition prevention tape (190) is disposed on a surface of the positive electrode active material portion (112) stacked between the one side portion of the positive electrode sheet (110) and the first positive electrode non-coating portion (113a) that is disposed close to the one side portion of the positive electrode sheet (110).

8. The electrode assembly of claim 7, wherein the separator (140) comprises:
a first separator (141) disposed between one surface of the positive electrode sheet (110) and the other surface of the negative electrode sheet (120); and
a second separator (142) disposed on one surface of the negative electrode sheet (120),
wherein the first negative electrode non-coating portion (123a) and the lithium ion deposition prevention tape (190) face each other with the second separator (142) therebetween.

9. The electrode assembly of any one of claims 1 to 6, wherein the first positive electrode tab (151) and the first negative electrode tab (161) are disposed so as not to overlap each other with respect to a direction in which the positive electrode sheet (110) and the negative electrode sheet (120) face each other.

10. The electrode assembly of claim 9, wherein the first positive electrode tab (151) protrudes toward one side with respect to a direction parallel to a winding central axis (C),
the first negative electrode tab (161) protrudes toward the other side with respect to the direction parallel to the winding central axis (C), and
ends of the first positive electrode tab (151) and the first negative electrode tab (161) are disposed to be spaced a predetermined distance from each other with respect to the direction parallel to the winding central axis (C) so as not to overlap each other.

11. An electrode assembly comprising:
a positive electrode sheet (110) comprising a positive electrode active material portion (112) that is an area on which a positive electrode active material is stacked on a positive electrode collector (111) and a positive electrode non-coating portion (113) that is an area on which the positive electrode active material is not stacked;
a positive electrode tab (150) disposed on the positive electrode non-coating portion (113);
a negative electrode sheet (120) comprising a negative electrode active material portion (122) that is an area on which a negative electrode active material is stacked on a negative electrode collector (121) and a negative electrode non-coating portion (123) that is an area on which the negative electrode active material is not stacked;
a negative electrode tab (160) disposed on the negative electrode non-coating portion (123); and
a separator (140) configured to insulate the positive electrode sheet (110) and the negative electrode sheet (120) from each other,
wherein the positive electrode non-coating portion (113) comprises a first positive electrode non-coating portion (113a) and a second positive electrode non-coating portion (113b), which are provided on two portions spaced apart from each other on the positive electrode sheet (110),
the negative electrode non-coating portion (123) comprises a first negative electrode non-coating portion (123a) disposed between both side portions of the negative electrode sheet (110) and second and third negative electrode non-coating portions (123b, 123c), which are respectively disposed on both side portions of the negative electrode sheet (120), and
the second positive electrode non-coating portion (113b) and the first negative electrode non-coating portion (123a) are disposed at positions corresponding to each other,
wherein the positive electrode tab (150) comprises a first positive electrode tab (151) disposed on the first positive electrode non-coating portion (113a) and a second positive electrode tab (152) disposed on the second positive electrode non-coating portion (113b), and
the negative electrode tab (160) comprises a first negative electrode tab (161) disposed on the first negative electrode non-coating portion (123a), a second negative electrode tab (162) disposed on the second negative electrode non-coating portion (123b), and a third negative electrode tab (163) disposed on the third negative electrode non-coating portion (123c),
the electrode assembly comprises an electrode assembly for a lithium ion secondary battery,
the positive electrode sheet (110), the separator (140), and the negative electrode sheet (120) are alternately stacked to be wound,
a first negative electrode insulation tape (181) is further attached to the first negative electrode non-coating portion (123a) to cover the first negative electrode tab (161), and
a lithium ion deposition prevention tape (190) is further attached to a surface of the positive electrode active material portion (112) of the positive electrode sheet (110) facing the first negative electrode insulation tape (181) to prevent lithium ions from being accumulated to be deposited when charging and discharging.

12. The electrode assembly of claim 11, wherein, in each of the positive electrode sheet (110) and the negative electrode sheet (120), one side portion of both side portions is wound in a clockwise direction to be disposed at a winding outer portion, and the other side portion is disposed at a winding central portion, and
the first positive electrode non-coating portion (113a) and the second positive electrode non-coating portion (113b) are disposed between both the side portions on the positive electrode sheet (110), wherein the second positive electrode non-coating portion (113b) is disposed on a side of the other side portion of the positive electrode sheet (110).

13. A secondary battery comprising the electrode assembly according to claim 1 and a battery case configured to accommodate the electrode assembly.

14. An electrode assembly comprising:
a positive electrode plate (1110) comprising a positive electrode active material portion (1112) on which a positive electrode active material is applied on a first surface of a positive electrode collector (1111) and a first positive electrode non-coating portion (1113a) that is an area on which the positive electrode active material is not applied;
a positive electrode tab (1150) attached to the first positive electrode non-coating portion, and comprising a first positive electrode tab and a second positive electrode tab;
a negative electrode plate (1120) comprising a negative electrode active material portion (1122) on which a negative electrode active material is applied on a first surface of a negative electrode collector (1121) facing the first surface of the positive electrode collector (1111) and a first negative electrode non-coating portion (1123a) that is an area on which the negative electrode active material is not applied; and
a separator (1140) disposed between the positive electrode plate and the negative electrode plate,
wherein the first positive electrode non-coating portion (1113a) is disposed between one end and the other end of the positive electrode plate in a longitudinal direction of the positive electrode plate, and
the first negative electrode non-coating portion is disposed at a position overlapping the first positive electrode non-coating portion,
the first negative electrode non-coating portion (1123a) is disposed between a second negative electrode non-coating portion and a third negative electrode non-coating portion, which are respectively disposed on each of both side portions of the negative electrode plate, and
the electrode assembly further comprises a negative electrode tab disposed on the first negative electrode non-coating portion and comprising a first negative electrode tab, a second negative electrode tab and a third negative electrode tab,
wherein the positive electrode plate further comprises a second positive electrode non-coating portion (1113b) that is an area on which the positive electrode active material is not applied, wherein the second positive electrode tab is further attached to the second positive electrode non-coating portion, and
the negative electrode plate further comprises second and third negative electrode non-coating portions (1123b, 1123c) that are areas on which the negative electrode active material is not applied, wherein the second and third negative electrode tabs are further attached to the second negative electrode non-coating portion and the third negative electrode non-coating portion respectively,
wherein the electrode assembly comprises an electrode assembly for a lithium ion secondary battery,
the positive electrode plate (1110), the separator (1140), and the negative electrode plate (1120) are alternately stacked to be wound,
a first negative electrode insulation tape is further attached to the first negative electrode non-coating portion to cover the negative electrode tab attached to the first negative electrode non-coating portion (1123a), and
a lithium ion deposition prevention tape is further attached to a portion of the positive electrode plate facing the first negative electrode insulation tape to prevent lithium ions from being accumulated to be deposited when charging and discharging, and
wherein the first negative electrode non-coating portion and the lithium ion deposition prevention tape face each other with the separator therebetween, and
the lithium ion deposition prevention tape is disposed on a surface of a positive electrode active material portion of the positive electrode plate.

## Patentansprüche

1. Elektrodenanordnung, umfassend:
eine positive Elektrodenbahn (110), welche einen positive Elektrode-Aktivmaterialabschnitt (112), welcher ein Bereich ist, an welchem ein positive Elektrode-Aktivmaterial an einem positive Elektrode-Kollektor (111) gestapelt ist, und einen positive Elektrode-Nichtbeschichtungsabschnitt (113) umfasst, welcher ein Bereich ist, an welchem das positive Elektrode-Aktivmaterial nicht gestapelt ist;
einen positiven Elektrodenstreifen (150), welcher an dem positive Elektrode-Nichtbeschichtungsabschnitt (113) angeordnet ist;
eine negative Elektrodenbahn (120), welche einen negative Elektrode-Aktivmaterialabschnitt (122), welcher ein Bereich ist, an welchem ein negative Elektrode-Aktivmaterial an einem negative Elektrode-Kollektor (121) gestapelt ist, und einen negative Elektrode-Nichtbeschichtungsabschnitt (123) umfasst, welcher ein Bereich ist, an welchem das negative Elektrode-Aktivmaterial nicht gestapelt ist;
einen negativen Elektrodenstreifen (160), welcher an dem negative Elektrode-Nichtbeschichtungsabschnitt angeordnet ist; und
einen Separator (140), welcher dazu eingerichtet ist, die positive Elektrodenbahn und die negative Elektrodenbahn voneinander zu isolieren,
wobei der positive Elektrode-Nichtbeschichtungsabschnitt (113) einen ersten positive Elektrode-Nichtbeschichtungsabschnitt (113a) und einen zweiten positive Elektrode-Nichtbeschichtungsabschnitt (113b) umfasst, welche an zwei Abschnitten, welche voneinander beabstandet sind, an der positiven Elektrodenbahn (110) bereitgestellt sind,
wobei der negative Elektrode-Nichtbeschichtungsabschnitt (123) einen ersten negative Elektrode-Nichtbeschichtungsabschnitt (123a), welcher zwischen beiden Seitenabschnitten der negativen Elektrodenbahn (120) angeordnet ist, und einen zweiten sowie einen dritten positive Elektrode-Nichtbeschichtungsabschnitt (123b, 123c) umfasst, welche jeweils an beiden Seitenabschnitten der negativen Elektrodenbahn (120) angeordnet sind, und
wobei der erste positive Elektrode-Nichtbeschichtungsabschnitt (113a) und der erste negative Elektrode-Nichtbeschichtungsabschnitt (123a) an Positionen angeordnet sind, welche einander entsprechen,
wobei der positive Elektrodenstreifen (150) einen ersten positiven Elektrodenstreifen (151), welcher an dem ersten positive Elektrode-Nichtbeschichtungsabschnitt (113a) angeordnet ist, und einen zweiten positiven Elektrodenstreifen (152) umfasst, welcher an dem zweiten positive Elektrode-Nichtbeschichtungsabschnitt (113b) angeordnet ist, und
wobei der negative Elektrodenstreifen (160) einen ersten negativen Elektrodenstreifen (161), welcher an dem ersten negative Elektrode-Nichtbeschichtungsabschnitt (123a) angeordnet ist, einen zweiten negativen Elektrodenstreifen (162), welcher an dem zweiten negative Elektrode-Nichtbeschichtungsabschnitt (123b) angeordnet ist, und einen dritten negativen Elektrodenstreifen (163) umfasst, welcher an dem dritten negative Elektrode-Nichtbeschichtungsabschnitt (123c) angeordnet ist,
wobei die Elektrodenanordnung eine Elektrodenanordnung für eine Lithiumionen-Sekundärbatterie umfasst,
wobei die positive Elektrodenbahn (110), der Separator (140) und die negative Elektrodenbahn (120) alternierend gestapelt sind, um gewickelt zu sein,
wobei ein erstes negative Elektrode-Isolierband (181) ferner an dem ersten negative Elektrode-Nichtbeschichtungsabschnitt (123a) befestigt ist, um den ersten negativen Elektrodenstreifen (161) abzudecken, und
wobei ein Lithiumionen-Ablagerungsverhinderungsband (190) ferner an einer Fläche des positive Elektrode-Aktivmaterialabschnitts (112) der positiven Elektrodenbahn (110) befestigt ist, welche dem ersten negative Elektrode-Isolierband (181) zugewandt ist, um zu verhindern, dass Lithiumionen zur Ablagerung angesammelt werden, wenn geladen und entladen wird.

2. Elektrodenanordnung nach Anspruch 1, wobei der Separator (140) ein Isoliermaterial umfasst, welches Poren aufweist, durch welche sich die Lithiumionen bewegen, und
wobei jedes aus dem ersten negative Elektrode-Isolierband (181) und dem Lithiumionen-Ablagerungsverhinderungsband (190) ein Isoliermaterial umfasst.

3. Elektrodenanordnung nach Anspruch 1, wobei, in jeder aus der positiven Elektrodenbahn (110) und der negativen Elektrodenbahn (120), ein Seitenabschnitt von beiden Seitenabschnitten im Uhrzeigersinn gewickelt ist, um an einem äußeren Wickelabschnitt angeordnet zu sein, und der andere Seitenabschnitt an einem zentralen Wickelabschnitt angeordnet ist, und
wobei der erste positive Elektrode-Nichtbeschichtungsabschnitt (113a) und der zweite positive Elektrode-Nichtbeschichtungsabschnitt (113b) zwischen beiden Seitenabschnitten an der positiven Elektrodenbahn (110) angeordnet sind, wobei der erste positive Elektrode-Nichtbeschichtungsabschnitt (113a) an einer Seite von einem Seitenabschnitt der positiven Elektrodenbahn (110) angeordnet ist.

4. Elektrodenanordnung nach Anspruch 3, wobei eine Fläche beider Flächen von jeder aus der positiven Elektrodenbahn (110) und der negativen Elektrodenbahn (120) während dem Wickeln nach innen angeordnet ist und die andere Fläche von der Wickelseite nach außen angeordnet ist.

5. Elektrodenanordnung nach Anspruch 1, wobei jede aus der positiven Elektrodenbahn (110) und der negativen Elektrodenbahn (120) von dem anderen Seitenabschnitt beider Seitenabschnitte davon gewickelt ist, um im Uhrzeigersinn in Richtung eines Seitenabschnitts gewickelt zu sein, wobei der andere Seitenabschnitt an einem zentralen Wickelabschnitt angeordnet ist, und wobei der eine Seitenabschnitt an einem äußeren Wickelabschnitt angeordnet ist, und
wobei jeder aus dem ersten positive Elektrode-Nichtbeschichtungsabschnitt (113a) und dem zweiten positive Elektrode-Nichtbeschichtungsabschnitt (113b) zwischen beiden Seitenabschnitten an der positiven Elektrodenbahn (110) angeordnet ist, wobei der erste positive Elektrode-Nichtbeschichtungsabschnitt (113a) an einer Seite von dem einen Seitenabschnitt der positiven Elektrodenbahn (110) angeordnet ist.

6. Elektrodenanordnung nach Anspruch 5, wobei eine Fläche beider Flächen von jeder aus der positiven Elektrodenbahn (110) und der negativen Elektrodenbahn (120) während dem Wickeln nach außen angeordnet ist und die andere Fläche von der Wickelseite nach innen angeordnet ist.

7. Elektrodenanordnung nach Anspruch 4 oder 6, wobei das Lithiumionen-Ablagerungsverhinderungsband (190) an der anderen Fläche der positiven Elektrodenbahn angeordnet ist,
wobei das Lithiumionen-Ablagerungsverhinderungsband (190) an einer Fläche des positive Elektrode-Aktivmaterialabschnitts (112) angeordnet ist, welche zwischen dem einen Seitenabschnitt der positiven Elektrodenbahn (110) und dem ersten positive Elektrode-Nichtbeschichtungsabschnitt (113a) gestapelt ist, welcher nahe an dem einen Seitenabschnitt der positiven Elektrodenbahn (110) angeordnet ist.

8. Elektrodenanordnung nach Anspruch 7, wobei der Separator (140) umfasst:
einen ersten Separator (141), welcher zwischen einer Fläche der positiven Elektrodenbahn (110) und der anderen Fläche der negativen Elektrodenbahn (120) angeordnet ist; und
einen zweiten Separator (142), welcher an einer Fläche der negativen Elektrodenbahn (120) angeordnet ist,
wobei der erste negative Elektrode-Nichtbeschichtungsabschnitt (123a) und das Lithiumionen-Ablagerungsverhinderungsband (190) mit dem zweiten Separator (142) dazwischen einander zugewandt sind.

9. Elektrodenanordnung nach einem der Ansprüche 1 bis 6, wobei der erste positive Elektrodenstreifen (151) und der erste negative Elektrodenstreifen (161) derart angeordnet sind, dass sie sich in Bezug auf eine Richtung nicht überlappen, in welcher die positive Elektrodenbahn (110) und die negative Elektrodenbahn (120) einander zugewandt sind.

10. Elektrodenanordnung nach Anspruch 9, wobei der erste positive Elektrodenstreifen (151) in Richtung einer Seite in Bezug auf eine Richtung hervorsteht, welche parallel zu einer zentralen Wickelachse (C) ist,
wobei der erste negative Elektrodenstreifen (161) in Richtung der anderen Seite in Bezug auf die Richtung hervorsteht, welche parallel zu der zentralen Wickelachse (C) ist, und
wobei Enden des ersten positiven Elektrodenstreifens (151) und des ersten negativen Elektrodenstreifens (161) derart angeordnet sind, dass sie in Bezug auf die Richtung, welche parallel zu der zentralen Wickelachse (C) ist, um einen vorbestimmten Abstand voneinander beabstandet sind, um sich einander nicht zu überlappen.

11. Elektrodenanordnung, umfassend:
eine positive Elektrodenbahn (110), welche einen positive Elektrode-Aktivmaterialabschnitt (112), welcher ein Bereich ist, an welchem ein positive Elektrode-Aktivmaterial an einem positive Elektrode-Kollektor (111) gestapelt ist, und einen positive Elektrode-Nichtbeschichtungsabschnitt (113) umfasst, welcher ein Bereich ist, an welchem das positive Elektrode-Aktivmaterial nicht gestapelt ist;
einen positiven Elektrodenstreifen (150), welcher an dem positive Elektrode-Nichtbeschichtungsabschnitt (113) angeordnet ist;
eine negative Elektrodenbahn (120), welche einen negative Elektrode-Aktivmaterialabschnitt (122), welcher ein Bereich ist, an welchem ein negative Elektrode-Aktivmaterial an einem negative Elektrode-Kollektor (121) gestapelt ist, und einen negative Elektrode-Nichtbeschichtungsabschnitt (123) umfasst, welcher ein Bereich ist, an welchem das negative Elektrode-Aktivmaterial nicht gestapelt ist;
einen negativen Elektrodenstreifen (160), welcher an dem negative Elektrode-Nichtbeschichtungsabschnitt (123) angeordnet ist; und
einen Separator (140), welcher dazu eingerichtet ist, die positive Elektrodenbahn (110) und die negative Elektrodenbahn (120) voneinander zu isolieren,
wobei der positive Elektrode-Nichtbeschichtungsabschnitt (113) einen ersten positive Elektrode-Nichtbeschichtungsabschnitt (113a) und einen zweiten positive Elektrode-Nichtbeschichtungsabschnitt (113b) umfasst, welche an zwei Abschnitten, welche voneinander beabstandet sind, an der positiven Elektrodenbahn (110) bereitgestellt sind,
wobei der negative Elektrode-Nichtbeschichtungsabschnitt (123) einen ersten negative Elektrode-Nichtbeschichtungsabschnitt (123a), welcher zwischen beiden Seitenabschnitten der negativen Elektrodenbahn (110) angeordnet ist, und einen zweiten sowie einen dritten negative Elektrode-Nichtbeschichtungsabschnitt (123b, 123c) umfasst, welche jeweils an beiden Seitenabschnitten der negativen Elektrodenbahn (120) angeordnet sind, und
wobei der zweite positive Elektrode-Nichtbeschichtungsabschnitt (113b) und der erste negative Elektrode-Nichtbeschichtungsabschnitt (123a) an Positionen angeordnet sind, welche einander entsprechen,
wobei der positive Elektrodenstreifen (150) einen ersten positiven Elektrodenstreifen (151), welcher an dem ersten positive Elektrode-Nichtbeschichtungsabschnitt (113a) angeordnet ist, und einen zweiten positiven Elektrodenstreifen (152) umfasst, welcher an dem zweiten positive Elektrode-Nichtbeschichtungsabschnitt (113b) angeordnet ist, und
wobei der negative Elektrodenstreifen (160) einen ersten negativen Elektrodenstreifen (161), welcher an dem ersten negative Elektrode-Nichtbeschichtungsabschnitt (123a) angeordnet ist, einen zweiten negativen Elektrodenstreifen (162), welcher an dem zweiten negative Elektrode-Nichtbeschichtungsabschnitt (123b) angeordnet ist, und einen dritten negativen Elektrodenstreifen (163) umfasst, welcher an dem dritten negative Elektrode-Nichtbeschichtungsabschnitt (123c) angeordnet ist,
wobei die Elektrodenanordnung eine Elektrodenanordnung für eine Lithiumionen-Sekundärbatterie umfasst,
wobei die positive Elektrodenbahn (110), der Separator (140) und die negative Elektrodenbahn (120) alternierend gestapelt sind, um gewickelt zu sein,
wobei ein erstes negative Elektrode-Isolierband (181) ferner an dem ersten negative Elektrode-Nichtbeschichtungsabschnitt (123a) befestigt ist, um den ersten negativen Elektrodenstreifen (161) abzudecken, und
wobei ein Lithiumionen-Ablagerungsverhinderungsband (190) ferner an einer Fläche des positive Elektrode-Aktivmaterialabschnitts (112) der positiven Elektrodenbahn (110) befestigt ist, welche dem ersten negative Elektrode-Isolierband (181) zugewandt ist, um zu verhindern, dass Lithiumionen zur Ablagerung angesammelt werden, wenn geladen und entladen wird.

12. Elektrodenanordnung nach Anspruch 11, wobei, in jeder aus der positiven Elektrodenbahn (110) und der negativen Elektrodenbahn (120), ein Seitenabschnitt von beiden Seitenabschnitten im Uhrzeigersinn gewickelt ist, um an einem äußeren Wickelabschnitt angeordnet zu sein, und der andere Seitenabschnitt an einem zentralen Wickelabschnitt angeordnet ist, und
wobei der erste positive Elektrode-Nichtbeschichtungsabschnitt (113a) und der zweite positive Elektrode-Nichtbeschichtungsabschnitt (113b) zwischen beiden Seitenabschnitten an der positiven Elektrodenbahn (110) angeordnet sind, wobei der zweite positive Elektrode-Nichtbeschichtungsabschnitt (113b) an einer Seite des anderen Seitenabschnitts der positiven Elektrodenbahn (110) angeordnet ist.

13. Sekundärbatterie, umfassend die Elektrodenanordnung nach Anspruch 1 und ein Batteriegehäuse, welches dazu eingerichtet ist, die Elektrodenanordnung aufzunehmen.

14. Elektrodenanordnung, umfassend:
eine positive Elektrodenplatte (1110), welche einen positive Elektrode-Aktivmaterialabschnitt (1112), auf welchen an einer ersten Fläche eines positive Elektrode-Kollektors (1111) ein positive Elektrode-Aktivmaterial aufgebracht ist, und einen ersten positive Elektrode-Nichtbeschichtungsabschnitt (1113a) umfasst, welcher ein Bereich ist, an welchem das positive Elektrode-Aktivmaterial nicht aufgebracht ist;
einen positiven Elektrodenstreifen (1150), welcher an dem ersten positive Elektrode-Nichtbeschichtungsabschnitt befestigt ist und welcher einen ersten positiven Elektrodenstreifen und einen zweiten positiven Elektrodenstreifen umfasst;
eine negative Elektrodenplatte (1120), welche einen negative Elektrode-Aktivmaterialabschnitt (1122), auf welchen an einer ersten Fläche eines negative Elektrode-Kollektors (1121), welche der ersten Fläche des positive Elektrode-Kollektors (1111) zugewandt ist, ein negative Elektrode-Aktivmaterial aufgebracht ist, und einen ersten negative Elektrode-Nichtbeschichtungsabschnitt (1123a) umfasst, welcher ein Bereich ist, an welchem das negative Elektrode-Aktivmaterial nicht aufgebracht ist,
einen Separator (1140), welcher zwischen der positiven Elektrodenplatte und der negativen Elektrodenplatte angeordnet ist,
wobei der erste positive Elektrode-Nichtbeschichtungsabschnitt (1113a) zwischen einem Ende und dem anderen Ende der positiven Elektrodenplatte in einer longitudinalen Richtung der positiven Elektrodenplatte angeordnet ist, und
wobei der erste negative Elektrode-Nichtbeschichtungsabschnitt an einer Position angeordnet ist, welche den ersten positive Elektrode-Nichtbeschichtungsabschnitt überlappt,
wobei der erste negative Elektrode-Nichtbeschichtungsabschnitt (1123a) zwischen einem zweiten negative Elektrode-Nichtbeschichtungsabschnitt und einem dritten negative Elektrode-Nichtbeschichtungsabschnitt angeordnet ist, welche jeweils an jedem von beiden Seitenabschnitten der negativen Elektrodenplatte angeordnet sind, und
wobei die Elektrodenanordnung ferner einen negativen Elektrodenstreifen umfasst, welcher an dem ersten negative Elektrode-Nichtbeschichtungsabschnitt angeordnet ist und welcher einen ersten negativen Elektrodenstreifen, einen zweiten negativen Elektrodenstreifen und einen dritten negativen Elektrodenstreifen umfasst,
wobei die positive Elektrodenplatte ferner einen zweiten positive Elektrode-Nichtbeschichtungsabschnitt (1113b) umfasst, welcher ein Bereich ist, auf welchen das positive Elektrode-Aktivmaterial nicht aufgebracht ist, wobei der zweite positive Elektrodenstreifen ferner an dem zweiten positive Elektrode-Nichtbeschichtungsabschnitt befestigt ist, und
wobei die negative Elektrodenplatte ferner einen zweiten und einen dritten negativen Elektrode-Nichtbeschichtungsabschnitt (1123b, 1123c) umfasst, welche Bereiche sind, auf welchen das negative Elektrode-Aktivmaterial nicht aufgebracht ist, wobei der zweite und der dritte negative Elektrodenstreifen ferner an dem zweiten negativen Elektrode-Nichtbeschichtungsabschnitt bzw. dem zweiten negativen Elektrode-Nichtbeschichtungsabschnitt befestigt sind,
wobei die Elektrodenanordnung eine Elektrodenanordnung für eine Lithiumionen-Sekundärbatterie umfasst,
wobei die positive Elektrodenplatte (1110), der Separator (1140) und die negative Elektrodenplatte (1120) alternierend gestapelt sind, um gewickelt zu sein,
wobei ein erstes negative Elektrode-Isolierband ferner an dem ersten negative Elektrode-Nichtbeschichtungsabschnitt befestigt ist, um den ersten negativen Elektrodenstreifen abzudecken, welcher an dem ersten negative Elektrode-Nichtbeschichtungsabschnitt (1123a) befestigt ist, und
wobei ein Lithiumionen-Ablagerungsverhinderungsband ferner an einem Abschnitt der positiven Elektrodenplatte befestigt ist, welcher dem ersten negative Elektrode-Isolierband zugewandt ist, um zu verhindern, dass Lithiumionen zur Ablagerung angesammelt werden, wenn geladen und entladen wird, und
wobei der erste negative Elektrode-Nichtbeschichtungsabschnitt und das Lithiumionen-Ablagerungsverhinderungsband mit dem Separator dazwischen einander zugewandt sind, und
wobei das Lithiumionen-Ablagerungsverhinderungsband an einer Fläche eines positive Elektrode-Aktivmaterialabschnitts der positiven Elektrodenplatte angeordnet ist.

## Revendications

1. Ensemble d'électrodes comprenant :
une feuille d'électrode positive (110)_ comprenant une partie de matériau actif d'électrode positive (112) qui est une zone sur laquelle un matériau actif d'électrode positive est empilé sur un collecteur d'électrode positive (111) et une partie sans revêtement d'électrode positive (113) qui est une zone sur laquelle le matériau actif d'électrode positive n'est pas empilé ;
une patte d'électrode positive (150) disposée sur la partie sans revêtement d'électrode positive (113) ;
une feuille d'électrode négative (120) comprenant une partie de matériau actif d'électrode négative (122) qui est une zone sur laquelle un matériau actif d'électrode négative est empilé sur un collecteur d'électrode négative (121) et une partie sans revêtement d'électrode négative (123) qui est une zone sur laquelle le matériau actif d'électrode négative n'est pas empilé ;
une patte d'électrode négative (160) disposée sur la partie sans revêtement d'électrode négative ; et
un séparateur (140) configuré pour isoler la feuille d'électrode positive et la feuille d'électrode négative l'une de l'autre,
dans lequel la partie sans revêtement d'électrode positive (113) comprend une première partie sans revêtement d'électrode positive (113a) et une deuxième partie sans revêtement d'électrode positive (113b), qui sont disposées sur deux parties espacées l'une de l'autre sur la feuille d'électrode positive (110),
la partie sans revêtement d'électrode négative (123) comprend une première partie sans revêtement d'électrode négative (123a) disposée entre les deux parties latérales de la feuille d'électrode négative (120) et les deuxième et troisième parties sans revêtement d'électrode négative (123b, 123c), qui sont respectivement disposées sur les deux parties latérales de la feuille d'électrode négative (120), et
la première partie sans revêtement d'électrode positive (113a) et la première partie sans revêtement d'électrode négative (123a) sont disposées à des positions correspondant l'une à l'autre,
dans lequel la patte d'électrode positive (150) comprend une première patte d'électrode positive (151) disposée sur la première partie sans revêtement d'électrode positive (113a) et une deuxième patte d'électrode positive (152) disposée sur la deuxième partie sans revêtement d'électrode positive (113b), et
la patte d'électrode négative (160) comprend une première patte d'électrode négative (161) disposée sur la première partie sans revêtement d'électrode négative (123a), une deuxième patte d'électrode négative (162) disposée sur la deuxième partie sans revêtement d'électrode négative (123b) et une troisième patte d'électrode négative (163) disposée sur la troisième partie sans revêtement d'électrode négative (123c),
l'ensemble d'électrodes comprend un ensemble d'électrodes pour une batterie secondaire au lithium-ion,
la feuille d'électrode positive (110), le séparateur (140) et la feuille d'électrode négative (120) sont empilés en alternance pour être enroulés,
un premier ruban isolant d'électrode négative (181) est en outre fixé à la première partie sans revêtement d'électrode négative (123a) pour recouvrir la première patte d'électrode négative (161), et
un ruban de prévention de dépôt d'ions lithium (190) est en outre fixé à une surface de la partie de matériau actif d'électrode positive (112) de la feuille d'électrode positive (110) orientée vers le premier ruban isolant d'électrode négative (181) pour empêcher les ions lithium de s'accumuler et se déposer lors de la charge et de la décharge.

2. Ensemble d'électrodes selon la revendication 1, dans lequel le séparateur (140) comprend un matériau isolant présentant des pores à travers lesquels les ions lithium se déplacent, et
chacun du premier ruban isolant d'électrode négative (181) et du ruban de prévention de dépôt d'ions lithium (190) comprend un matériau isolant.

3. Ensemble d'électrodes selon la revendication 1, dans lequel, dans chacune de la feuille d'électrode positive (110) et de la feuille d'électrode négative (120), une partie latérale des deux parties latérales est enroulée dans le sens des aiguilles d'une montre pour être disposée au niveau d'une partie externe d'enroulement, et l'autre partie latérale est disposée au niveau d'une partie centrale d'enroulement, et
la première partie sans revêtement d'électrode positive (113a) et la deuxième partie sans revêtement d'électrode positive (113b) sont disposées entre les deux parties latérales sur la feuille d'électrode positive (110), dans lequel la première partie sans revêtement d'électrode positive (113a) est disposée sur un côté d'une partie latérale de la feuille d'électrode positive (110).

4. Ensemble d'électrodes selon la revendication 3, dans lequel une surface des deux surfaces de chacune de la feuille d'électrode positive (110) et de la feuille d'électrode négative (120) est disposée vers l'intérieur pendant l'enroulement, et l'autre surface est disposée vers l'extérieur à partir du côté enroulement.

5. Ensemble d'électrodes selon la revendication 1, dans lequel chacune de la feuille d'électrode positive (110) et de la feuille d'électrode négative (120) est enroulée à partir de l'autre partie latérale des deux parties latérales de celle-ci de façon à être enroulée vers une partie latérale dans le sens des aiguilles d'une montre, dans lequel l'autre partie latérale est disposée au niveau d'une partie centrale d'enroulement, et la partie latérale est disposée au niveau d'une partie extérieure d'enroulement, et
chacune de la première partie sans revêtement d'électrode positive (113a) et de la deuxième partie sans revêtement d'électrode positive (113b) est disposée entre les deux parties latérales sur la feuille d'électrode positive (110), dans lequel la première partie sans revêtement d'électrode positive (113a) est disposée sur un côté de la partie latérale de la feuille d'électrode positive (110).

6. Ensemble d'électrodes selon la revendication 5, dans lequel une surface des deux surfaces de chacune de la feuille d'électrode positive (110) et de la feuille d'électrode négative (120) est disposée vers l'extérieur pendant l'enroulement, et l'autre surface est disposée vers l'intérieur à partir du côté enroulement.

7. Ensemble d'électrodes selon la revendication 4 ou 6, dans lequel le ruban de prévention de dépôt d'ions lithium (190) est disposé sur l'autre surface de la feuille d'électrode positive, dans lequel le ruban de prévention de dépôt d'ions lithium (190) est disposé sur une surface de la partie de matériau actif d'électrode positive (112) empilée entre la partie latérale de la feuille d'électrode positive (110) et la première partie sans revêtement d'électrode positive (113a) qui est disposée à proximité de la partie latérale de la feuille d'électrode positive (110).

8. Ensemble d'électrodes selon la revendication 7, dans lequel le séparateur (140) comprend :
un premier séparateur (141) disposé entre une surface de la feuille d'électrode positive (110) et l'autre surface de la feuille d'électrode négative (120) ; et
un deuxième séparateur (142) disposé sur une surface de la feuille d'électrode négative (120),
dans lequel la première partie sans revêtement d'électrode négative (123a) et le ruban de prévention de dépôt d'ions lithium (190) se font face avec le deuxième séparateur (142) entre eux.

9. Ensemble d'électrodes selon l'une quelconque des revendications 1 à 6, dans lequel la première patte d'électrode positive (151) et la première patte d'électrode négative (161) sont disposées de façon à ne pas se chevaucher par rapport à une direction dans laquelle la feuille d'électrode positive (110) et la feuille d'électrode négative (120) se font face.

10. Ensemble d'électrodes selon la revendication 9, dans lequel la première patte d'électrode positive (151) fait saillie vers un côté par rapport à une direction parallèle à un axe central d'enroulement (C),
la première patte d'électrode négative (161) fait saillie vers l'autre côté par rapport à la direction parallèle à l'axe central d'enroulement (C), et
des extrémités de la première patte d'électrode positive (151) et de la première patte d'électrode négative (161) sont disposées de façon à être espacées l'une de l'autre d'une distance prédéterminée par rapport à la direction parallèle à l'axe central d'enroulement (C) de manière à ne pas se chevaucher.

11. Ensemble d'électrodes comprenant :
une feuille d'électrode positive (110) comprenant une partie de matériau actif d'électrode positive (112) qui est une zone sur laquelle un matériau actif d'électrode positive est empilé sur un collecteur d'électrode positive (111) et une partie sans revêtement d'électrode positive (113) qui est une zone sur laquelle le matériau actif d'électrode positive n'est pas empilé ;
une patte d'électrode positive (150) disposée sur la partie sans revêtement d'électrode positive (113) ;
une feuille d'électrode négative (120) comprenant une partie de matériau actif d'électrode négative (122) qui est une zone sur laquelle un matériau actif d'électrode négative est empilé sur un collecteur d'électrode négative (121) et une partie sans revêtement d'électrode négative (123) qui est une zone sur laquelle le matériau actif d'électrode négative n'est pas empilé ;
une patte d'électrode négative (160) disposée sur la partie sans revêtement d'électrode négative (123) ;
un séparateur (140) configuré pour isoler la feuille d'électrode positive (110) et la feuille d'électrode négative (120) l'une de l'autre,
dans lequel la partie sans revêtement d'électrode positive (113) comprend une première partie sans revêtement d'électrode positive (113a) et une deuxième partie sans revêtement d'électrode positive (113b), qui sont disposées sur deux parties espacées l'une de l'autre sur la feuille d'électrode positive (110),
la partie sans revêtement d'électrode négative (123) comprend une première partie sans revêtement d'électrode négative (123a) disposée entre les deux parties latérales de la feuille d'électrode négative (110) et les deuxième et troisième parties sans revêtement d'électrode négative (123b, 123c), qui sont respectivement disposées sur les deux parties latérales de la feuille d'électrode négative (120), et
la deuxième partie sans revêtement d'électrode positive (113b) et la première partie sans revêtement d'électrode négative (123a) sont disposées à des positions correspondant l'une à l'autre,
dans lequel la patte d'électrode positive (150) comprend une première patte d'électrode positive (151) disposée sur la première partie sans revêtement d'électrode positive (113a) et une deuxième patte d'électrode positive (152) disposée sur la deuxième partie sans revêtement d'électrode positive (113b), et
la patte d'électrode négative (160) comprend une première patte d'électrode négative (161) disposée sur la première partie sans revêtement d'électrode négative (123a), une deuxième patte d'électrode négative (162) disposée sur la deuxième partie sans revêtement d'électrode négative (123b) et une troisième patte d'électrode négative (163) disposée sur la troisième partie sans revêtement d'électrode négative (123c),
l'ensemble d'électrodes comprend un ensemble d'électrodes pour une batterie secondaire au lithium-ion,
la feuille d'électrode positive (110), le séparateur (140) et la feuille d'électrode négative (120) sont empilés en alternance pour être enroulés,
un premier ruban isolant d'électrode négative (181) est en outre fixé à la première partie sans revêtement d'électrode négative (123a) pour recouvrir la première patte d'électrode négative (161), et
un ruban de prévention de dépôt d'ions lithium (190) est en outre fixé à une surface de la partie de matériau actif d'électrode positive (112) de la feuille d'électrode positive (110) orientée vers le premier ruban isolant d'électrode négative (181) pour empêcher les ions lithium de s'accumuler et se déposer lors de la charge et de la décharge.

12. Ensemble d'électrodes selon la revendication 11, dans lequel, dans chacune de la feuille d'électrode positive (110) et de la feuille d'électrode négative (120), une partie latérale des deux parties latérales est enroulée dans le sens des aiguilles d'une montre pour être disposée au niveau d'une partie externe d'enroulement, et l'autre partie latérale est disposée au niveau d'une partie centrale d'enroulement, et
la première partie sans revêtement d'électrode positive (113a) et la deuxième partie sans revêtement d'électrode positive (113b) sont disposées entre les deux parties latérales sur la feuille d'électrode positive (110), dans lequel la deuxième partie sans revêtement d'électrode positive (113b) est disposée sur un côté de l'autre partie latérale de la feuille d'électrode positive (110).

13. Batterie secondaire comprenant l'ensemble d'électrodes selon la revendication 1 et un boîtier de batterie configuré pour loger l'ensemble d'électrodes.

14. Ensemble d'électrodes comprenant :
une plaque d'électrode positive (1110) comprenant une partie de matériau actif d'électrode positive (1112) sur laquelle un matériau actif d'électrode positive est appliqué sur une première surface d'un collecteur d'électrode positive (1111) et une première partie sans revêtement d'électrode positive (1113a) qui est une zone sur laquelle le matériau actif d'électrode positive n'est pas appliqué ;
une patte d'électrode positive (1150) fixée à la première partie sans revêtement d'électrode positive, et comprenant une première patte d'électrode positive et une deuxième patte d'électrode positive ;
une plaque d'électrode négative (1120) comprenant une partie de matériau actif d'électrode négative (1122) sur laquelle un matériau actif d'électrode négative est appliqué sur une première surface d'un collecteur d'électrode négative (1121) faisant face à la première surface du collecteur d'électrode positive (1111) et une première partie sans revêtement d'électrode négative (1123a) qui est une zone sur laquelle le matériau actif d'électrode négative n'est pas appliqué ; et
un séparateur (1140) disposé entre la plaque d'électrode positive et la plaque d'électrode négative,
dans lequel la première partie sans revêtement d'électrode positive (1113a) est disposée entre une extrémité et l'autre extrémité de la plaque d'électrode positive dans une direction longitudinale de la plaque d'électrode positive, et
la première partie sans revêtement d'électrode négative est disposée à une position chevauchant la première partie sans revêtement d'électrode positive,
la première partie sans revêtement d'électrode négative (1123a) est disposée entre une deuxième partie sans revêtement d'électrode négative et une troisième partie sans revêtement d'électrode négative, qui sont respectivement disposées sur chacune des deux parties latérales de la plaque d'électrode négative, et
l'ensemble d'électrodes comprend en outre une patte d'électrode négative disposée sur la première partie sans revêtement d'électrode négative et comprenant une première patte d'électrode négative, une deuxième patte d'électrode négative et une troisième patte d'électrode négative,
dans lequel la plaque d'électrode positive comprend en outre une deuxième partie sans revêtement d'électrode positive (1113b) qui est une zone sur laquelle le matériau actif d'électrode positive n'est pas appliqué, dans lequel la deuxième patte d'électrode positive est en outre fixée à la deuxième partie sans revêtement d'électrode positive, et
la plaque d'électrode négative comprend en outre une deuxième et une troisième partie sans revêtement d'électrode négative (1123b, 1123c) qui sont des zones sur lesquelles le matériau actif d'électrode négative n'est pas appliqué, dans lequel les deuxième et troisième pattes d'électrode négative sont en outre fixées à la deuxième partie sans revêtement d'électrode négative et à la troisième partie sans revêtement d'électrode négative respectivement,
dans lequel l'ensemble d'électrodes comprend un ensemble d'électrodes pour une batterie secondaire au lithium-ion,
la plaque d'électrode positive (1110), le séparateur (1140) et la plaque d'électrode négative (1120) sont empilés en alternance pour être enroulés,
un premier ruban isolant d'électrode négative est en outre fixé à la première partie sans revêtement d'électrode négative pour recouvrir la patte d'électrode négative fixée à la première partie sans revêtement d'électrode négative (1123a), et
un ruban de prévention de dépôt d'ions lithium est en outre fixé à une partie de la plaque d'électrode positive faisant face au premier ruban isolant d'électrode négative pour empêcher les ions lithium de s'accumuler et se déposer lors de la charge et de la décharge, et
dans lequel la première partie sans revêtement d'électrode négative et le ruban de prévention de dépôt d'ions lithium se font face avec le séparateur entre eux, et
le ruban de prévention de dépôt d'ions lithium est disposé sur une surface d'une partie de matériau actif d'électrode positive de la plaque d'électrode positive.
